# EUROPEAN PATENT APPLICATION

(11) **EP 4 661 311 A1**
(43) Date of publication of application: **10.12.2025**
(21) Application number: 24756249.9
(22) Date of filing: 07.02.2024
(51) Int. Cl.: H04B 7/06

(54) **CSI TRANSMITTING METHOD, UE, AND READABLE STORAGE MEDIUM**

(30) Priority: 16.02.2023 CN 202310134204
(71) Applicant: Vivo Mobile Communication Co., Ltd., Dongguan, Guangdong 523863 (CN)
(72) Inventor: JIANG, Lu, Dongguan, Guangdong 523863 (CN); CHEN, Xiaohang, Dongguan, Guangdong 523863 (CN); LI, Gen, Dongguan, Guangdong 523863 (CN); PAN, Xueming, Dongguan, Guangdong 523863 (CN)
(74) Representative: Murgitroyd & Company
(86) International application number: PCT/CN2024/076701
(87) International publication number: WO 2024/169876

(57) **Abstract**

This application discloses a CSI sending method, CSI sending apparatus (60), and a readable storage medium, and belongs to the communication field. The CSI sending method in embodiments of this application includes: sending (201), by a user equipment, UE (11), a plurality of pieces of first channel state information, CSI, to a network side device (12) according to a first form, where the plurality of pieces of first CSI are CSI for different measurement assumptions; and the first form includes: feeding back one CSI report, where the CSI report includes the plurality of pieces of first CSI.

## Description

### CROSS-REFERENCE TO RELATED APPLICATIONS

This application claims the priority of Chinese Patent Application No. 202310134204.3, filed in China on February 16, 2023, the entire content of which is hereby incorporated by reference.

### TECHNICAL FIELD

This application belongs to the field of communication technologies, and specifically relates to a CSI sending method, UE, and a readable storage medium.

### BACKGROUND

Currently, in a case that user equipment (User Equipment, UE) reports channel state information (Channel State Information, CSI), and a network side device indicates the UE to report two pieces of CSI, if the UE does not receive an indication from the network side device, the UE may still report a single piece of CSI configured by the network side device, so that the network side device may not be able to parse out content reported by the UE in this case. Therefore, a method is urgently needed, so that the CSI reported by the UE can be normally interpreted by the network side device in a case that no indication from the network side device is received.

In addition, when the UE reports a plurality of pieces of CSI, a problem of high CSI overheads exists. How to reduce overheads during CSI reporting is an urgent problem that needs to be solved.

### SUMMARY

Embodiments of this application provide a CSI sending method, UE, and a readable storage medium, which can solve a problem that a plurality of pieces of CSI reported by UE cannot be normally interpreted by a network side device in a case that no indication from the network side device is received. In addition, a problem of high overheads when the plurality of pieces of CSI are reported by the UE at the same time is also solved.

According to a first aspect, a CSI sending method is provided, where the CSI sending method is applied to UE, and the method includes: sending, by the UE, a plurality of pieces of first CSI to a network side device according to a first form, where the plurality of pieces of first CSI are CSI for different measurement assumptions; and the first form includes at least one of the following: feeding back one CSI report, where the CSI report includes the plurality of pieces of first CSI; or feeding back a plurality of CSI reports, where one CSI report includes at least one piece of first CSI.

According to a second aspect, a CSI sending apparatus is provided, and the apparatus includes a sending module, where the sending module is configured to send a plurality of pieces of first CSI to a network side device according to a first form, where the plurality of pieces of first CSI are CSI for different measurement assumptions; and the first form includes at least one of the following: feeding back one CSI report, where the CSI report includes the plurality of pieces of first CSI; or feeding back a plurality of CSI reports, where one CSI report includes at least one piece of first CSI.

According to a third aspect, UE is provided, where the UE includes a processor and a memory, the memory stores a program or instructions capable of running on the processor, and the program or instructions are executed by the processor to implement the steps of the method according to the first aspect.

According to a fourth aspect, UE is provided, including a processor and a communication interface, where the processor is configured to send a plurality of pieces of first CSI to a network side device according to a first form.

According to a fifth aspect, a CSI sending system is provided, including: UE and a network side device, where the UE may be configured to perform the steps of the CSI method according to the first aspect.

According to a sixth aspect, a readable storage medium is provided, where a program or instructions are stored on the readable storage medium, and the program or the instructions are executed by a processor to implement the steps of the method according to the first aspect.

According to a seventh aspect, a chip is provided, where the chip includes a processor and a communication interface, the communication interface is coupled to the processor, and the processor is configured to run a program or instructions to implement the steps of the method according to the first aspect.

According to an eighth aspect, a computer program/a program product is provided, where the computer program/the program product is stored in a storage medium, and the computer program/the program product is executed by at least one processor to implement the steps of the method according to the first aspect.

In embodiments of this application, UE sends a plurality of pieces of first CSI to a network side device according to a first form, where the plurality of pieces of first CSI are CSI for different measurement assumptions; and the first form includes at least one of the following: feeding back one CSI report, where the CSI report includes the plurality of pieces of first CSI; or feeding back a plurality of CSI reports, where one CSI report includes at least one piece of first CSI. A purpose of reporting the plurality of pieces of first CSI by the UE is that the plurality of pieces of first CSI are latest CSI obtained for different measurement assumptions. After the network side device has the plurality of pieces of latest CSI based on different measurement assumptions, it is more convenient to schedule data information according to a requirement, and the plurality of pieces of first CSI help the network side device make a more effective antenna muting decision.

### BRIEF DESCRIPTION OF DRAWINGS

FIG. 1 is a schematic architecture diagram of a communication system according to an embodiment of this application;
FIG. 2 is a schematic diagram of some antennas on a shielding panel according to an embodiment of this application;
FIG. 3 is a schematic diagram of CPU occupation according to an embodiment of this application;
FIG. 4 is a flowchart of a CSI sending method according to an embodiment of this application;
FIG. 5 is a first schematic diagram of a configuration according to an embodiment of this application;
FIG. 6 is a second schematic diagram of a configuration according to an embodiment of this application;
FIG. 7 is a schematic diagram of a muting pattern according to an embodiment of this application;
FIG. 8 is a schematic diagram of a CSI sending apparatus according to an embodiment of this application;
FIG. 9 is a schematic diagram of a hardware structure of a communication device according to an embodiment of this application; and
FIG. 10 is a schematic diagram of a hardware structure of UE according to an embodiment of this application.

### DESCRIPTION OF EMBODIMENTS

The following clearly describes the technical solutions in embodiments of this application with reference to the accompanying drawings in the embodiments of this application. Clearly, the described embodiments are some but not all of the embodiments of this application. All other embodiments obtained by a person of ordinary skill in the art based on the embodiments of this application shall fall within the protection scope of this application.

In the specification and claims of this application, the terms "first" and "second" are used to distinguish between similar objects, but are unnecessarily used to describe a specific sequence or order. It should be understood that the terms in such a way are exchangeable in a proper case, so that the embodiments of this application described herein can be implemented in an order other than the order shown or described herein. In addition, objects distinguished by "first", "second", and the like are generally of one type, and a number of objects is not limited. For example, there may be one or more first objects. In addition, "and/or" in this specification and the claims represents at least one of the connected objects, and the character "/" generally represents an "or" relationship between the associated objects.

It should be noted that technologies described in embodiments of this application are not limited to a Long Term Evolution (Long Term Evolution, LTE)/LTE-Advanced (LTE-Advanced, LTE-A) system, and may be further applied to another wireless communication system such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency Division Multiple Access (Single-carrier Frequency Division Multiple Access, SC-LTE-A), and another system. The terms "system" and "network" in the embodiments of this application are often used interchangeably. The described technology may be used in the foregoing system and radio technology, or may be used in another system and radio technology. The following description describes a New Radio (New Radio, NR) system for example, and the NR term is used in most of the following descriptions. However, these technologies may also be applied to applications other than NR system applications, such as a 6th Generation (6th Generation, 6G) communication system.

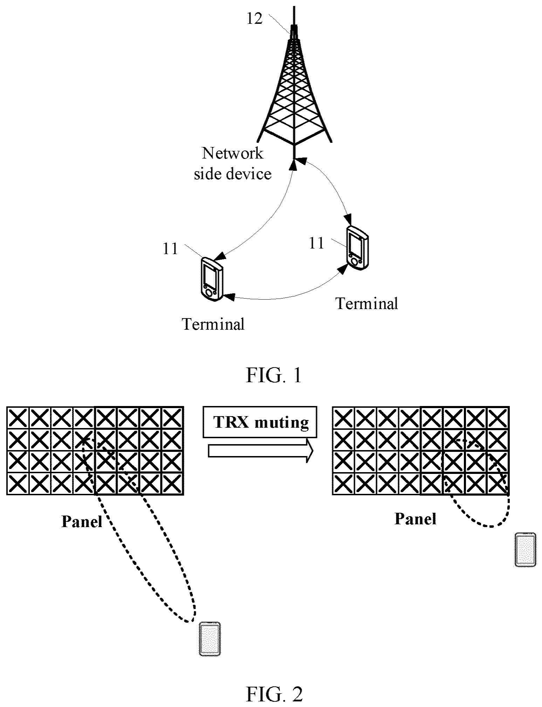

FIG. 1 is a block diagram of a wireless communication system applicable to an embodiment of this application. The wireless communication system includes a terminal 11 and a network side device 12. The terminal 11 may be a terminal-side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), a vehicular user equipment (VUE), a pedestrian user equipment (PUE), a smart home (a home device with a wireless communication function, such as a refrigerator, a television, a washing machine, or furniture), a game machine, a personal computer (personal computer, PC), a teller machine, or a self-service device. The wearable device includes: a smart watch, a smart band, a smart headset, smart glasses, smart jewelry (a smart wristlet, a smart bracelet, a smart ring, a smart necklace, a smart leglet, a smart anklet, and the like), a smart wrist strap, a smart dress, and the like. It should be noted that a specific type of the terminal 11 is not limited in this embodiment of this application. The network side device 12 may include an access network device or a core network device. The access network device 12 may also be referred to as a radio access network device, a radio access network (Radio Access Network, RAN), a radio access network function, or a radio access network unit. The access network device 12 may include a base station, a WLAN access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting receiving point (Transmitting Receiving Point, TRP), or another suitable term in the art. Provided that a same technical effect is achieved, the base station is not limited to a specific technical term. It should be noted that in embodiments of this application, only a base station in an NR system is used as an example for description, and a specific type of the base station is not limited.

The following describes some concepts and/or terms in same channel state information CSI sending provided in embodiments of this application.

### 1. Network energy saving

Currently, a conventional energy saving manner of a network side device (for example, a base station) mainly uses a means of on-site power-off, a time control switch, cell blocking, and the like. However, the foregoing manner is relatively coarse, and user perception cannot be considered. In the 5G era, because a 5G base station uses 64T64R massive array antennas, and supports a larger bandwidth, energy consumption of the 5G base station is higher than that of a 4G base station. Second, because a 5G frequency band is high and a coverage area of a single base station is small, if a coverage effect of a 4G network is to be achieved, a deployment scale of the 5G base station is 2 to 3 times that of the 4G base station, thereby causing higher power consumption of a device, a larger number of base stations, and higher electricity consumption. Because the high power consumption of 5G has become a pain point in current network operation, it is imperative to study energy saving of the 5G base station technology.

Energy saving of a base station can be divided into symbol shutdown, carrier shutdown, channel shutdown, and deep sleep technology according to an implementation principle. A technical background of energy saving in space domain is: Massive multiple-input multiple-output (multiple-input multiple-output, MIMO) consumes relatively much energy because of a relatively large number of antennas and a relatively large number of corresponding radio frequency components. Therefore, when a number of UEs in a cell is relatively small, a capacity/coverage gain brought by mMIMO may be redundant. In this case, the network side device may dynamically disable some transceiver units TxRU to achieve a network energy saving purpose. FIG. 2 is a schematic diagram of some antennas on a shielding panel according to an embodiment of this application. As shown in FIG. 2, TxRUs corresponding to some antenna units may be disabled to serve a small number of users. After some TxRUs are disabled, a coverage area of a beam decreases, and a beam width increases.

### 2. Content of CSI reporting

CSI includes one or more of a channel state information reference signal resource indicator (Channel-state information reference signals Resource Indicator, CRI), a synchronization signal block (Synchronization Signal Block, SSB) index, a rank indicator (Rank Indicator, RI), a channel quality indicator (Channel Quality Indicator, CQI), a precoding matrix indicator (Precoding Matrix Indicator, PMI), an indicator of the number of non-zero wideband amplitude coefficients (Indicator of the number of non-zero wideband amplitude coefficients), reference signal received power (Reference Signal Received Power, RSRP), and a layer indicator (Layer Indicator).

CSI reporting includes two parts, where part 1 (namely, Part 1) has a fixed payload size and is used to identify a number of information bits in part 2 (namely, Part 2); and Part 1 should be completely transmitted before Part 2.

For Type I CSI feedback, Part 1 includes the following information: an RI (if reported), a CRI (if reported), a CQI of a first codeword; and Part 2 includes a PMI (if reported) and a CQI of a second codeword when the RI (if reported) is greater than 4.

For Type II CSI feedback, Part 1 includes an RI (if reported), a CQI, and an indicator of the number of non-zero wideband amplitude coefficients at each layer of Type II CSI, and fields included in Part 1 are independently coded. Part 2 includes a PMI of Type II CSI. Part 1 and Part 2 are independently coded.

When a high-layer parameter quality report reportQuantity is configured as one of "cri-RSRP" or "ssb-Index-RSRP", CSI feedback includes only a single part.

In an existing protocol, there is a mapping order design for a plurality of pieces of CSI, which is arrangement for a plurality of pieces of CSI in a scenario of non-coherent joint transmission (NON-COHERENT JOINT TRANSMISSION, NCJT) CSI. csi-ReportMode represents different CSI report modes, where Mode1 refers to a mode in which CSI of NCJT is definitely reported, and numberOfSingleTRP-CSI-Mode1 specifies a number of CSI reported in the mode Mode1. Mode2 refers to selecting best of NCJT CSI and CSI of a single TRP for reporting.

According to numberOfSingleTRP-CSI-Mode1=0, 1, 2, CSI report modes may be classified into the following three submodes:
submode 1: NCJT CSI;
submode 2: NCJT CSI+ single single piece of TRP CSI; and
submode 3: NCJT CSI+ two pieces of single TRP CSI.

An arrangement logic of the foregoing mapping order is CRI\two rank combination indicators (Rank Combination Indicator, RI)\two LIs\zero padding\PMI X2 associated with the second resource in PMI X1\CSI-RS resource pair associated with the second resource in PMI X2\CSI-RS resource pair associated with the first resource in PMI X1\CSI-RS resource pair associated with the first resource resource in a CSI-RS resource pair.

In the mode Mode1, in a case of numberOfSingleTRP-CSI-Mode1 = 1 (that is, reporting NCJT CSI+CSI of a single TRP) or 2 (that is, reporting NCJT CSI+CSI of two TRPs), a CSI arrangement sequence is:

Reporting CSI of two TRPs is used as an example. When numberOfSingleTRP-CSI-Mode1 = 2, an arrangement logic behind the CSI mapping order is: ① NCJT CRI/RI/wideband CQI/subband differential CQI; ② CRI/RI/wideband CQI/subband differential CQI associated with a first CSI-RS resource; and ③ CRI/RI/wideband CQI/subband differential CQI associated with a second CSI-RS resource.

### 4. CSI reporting resource configuration

There is PUCCH-CSI-Resource in the CSI reporting resource configuration CSI-ReportConfig, that is, a PUCCH Resource Id used by the CSI on PUCCH is configured. The PUCCH Resource Id may include the following content:

```
         PUCCH-CSI-Resource ::=
         SEQUENCE
         {
         uplinkBandwidthPartId
         BWP-Id
         Pucch-Resource
         PUCCH-ResourceId
         }.
```

### 5. CSI reporting configuration

CSI may be reported by using a PUCCH or a PUSCH. A reporting type of the CSI may be classified into: periodic reporting (PUCCH reporting), aperiodic reporting (PUSCH reporting), semi-static reporting on the PUCCH, and semi-static reporting on the PUSCH (activated by DCI), and is indicated by a parameter reportConfig in IE CSI-ReportConfig.

Each CSI reporting IE CSI-ReportConfig is associated with a BWP ID associated with IE CSI-ResourceConfig used for channel measurement (refer to CSI resource configuration in Section 1.2.2 of an existing protocol, a BWP ID associated is provided in IE CSI-ResourceConfig, and CSI-ResourceConfigId is provided in IE CSI-ResourceConfig, where the ID is used to determine an IE CSI-ResourceConfig instance in IE CSI-ReportConfig; and therefore, the three may be associated together). In addition, each IE CSI-ReportConfig includes the following parameters: a codebook subset limitation, a time domain behavior, a frequency granularity of a CQI and a PMI, a measurement limitation configuration, and a codebook configuration of a CSI related quantities that the UE needs to report, such as, LI, L1-RSRP, CRI, and SSBRI.

If the UE needs to report related CSI parameters such as a CQI, a PMI, an LI, and an RI, when calculating the related CSI parameters, the UE has the following dependency relationship:
1. The RI is calculated according to the reported CRI.
2. The PMI is calculated according to the reported RI and CRI.
3. The CQI is calculated according to the reported PMI, RI, and CRI.
4. The LI is calculated according to the reported CQI, PMI, RI, and CRI.
6. CQI table

The CQI may be understood as a desired MCS, This informs the gNB that if it applies the reported precoder matrix directly for PDSCH precoding, it can set the MCS according to the reported CQI (desired MCS, This informs the gNB that if it applies the reported precoder matrix directly for PDSCH precoding, it can set the MCS according to the reported CQI). That is, it is assumed that after the PDSCH uses the PMI and the RI that are reported by the UE, the UE recommends an MCS to the gNB. If the base station does not use the CQI reported by the UE, the CQI may also be mapped as a signal to interference plus noise ratio (Signal to Interference plus Noise Ratio, SINR) value, which is used for link adaptation (link adaptation). An index of each CQI corresponds to one modulation order and a bit rate. Generally, the MCS is a maximum modulation order whose block error rate (block error rate, BLER) is less than 10%. However, in ultra-reliable & low-latency communication (ultra-reliable & low-latency communication, URLLC), the BLER is 10-5.

A table table of each CQI is obtained according to a table of the MCS. Then, there are three MCS tables in R15, one is maximum 64QAM modulation, one is maximum 256 modulation, and one is a URLLC table. Then, a corresponding CQI table is separately set for the three MCS tables.

### 7. SPS PUCCH

An existing protocol describes how to acknowledge an SPS PUCCH resource; and if UE is configured with an SPS-PUCCH-AN-List, a UCI includes only UCI information of an HARQ-ACK for one or more SPS PDSCHs and SRs, and a number of information bits is *O*_{UCI}, a resource selection manner of a PUCCH in cases of *O*_{UCI} ≤ 2, 2 < *O*_{UCI} ≤ *N*_{1*,SPS*}, *N*_{1*,SPS*} < *O*_{UCI} ≤ *N*_{2*,SPS*}, and *N*_{2*,SPS*} < *O*_{UCI} ≤ *N*₃*_{,SPS}.*

### 8. CSI processing criteria processing criteria (214 5.2.1.6)

CSI processing criteria are described in the existing protocol. *N_{CPU}* depends on a capability of UE, a number of CPUs represents a number of CSI that can be simultaneously calculated and supported by the UE. In addition, a calculation manner of the CPU is also described in the protocol. It should be noted that a number of occupied CPUs *O_{CPU}* is related to a number of resources in a CSI-RS resource set used for channel measurement. In addition, for different types of CSI reporting, a position of an OFDM symbol occupied by the CPU is also specified.

For periodic and semi-static CSI reporting (ruling out SP CSI reports on PUSCH triggered by the PDCCH), occupation starts from a first symbol of an earliest CSI-RS/CSI-IM/SSB resource for channel measurement or interference measurement until a last symbol of a configured PUSCH/PUCCH that carries the report ends. For aperiodic CSI reporting, an occupied CPU starts from a first symbol of a PDCCH that triggers CSI reporting to a last symbol position of a PUSCH that carries the report.

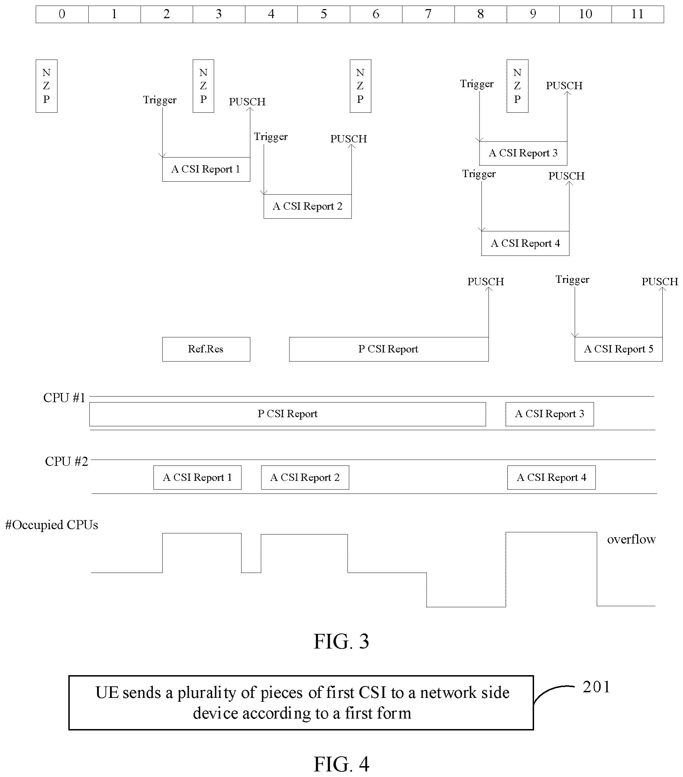

FIG. 3 is a schematic diagram of CPU occupation according to an embodiment of this application. As shown in FIG. 3, for an SP CSI Report on a PUSCH, an occupied CPU starts from a first symbol of a PDCCH that triggers CSI reporting to a scheduling PUSCH that carries the CSI report.

### 9. Reporting priority of CSI part2 (214.5.2.3)

When CSI reported on a PUSCH includes two parts, overheads of CSI Part 2 are determined by CSI Part 1, and a base station cannot accurately predict the overheads in advance. When an allocated resource is insufficient to feed back all content of CSI Part 2, feedback of some narrowband coefficients is discarded.

Part 2 CSI is omitted according to a priority sequence shown in the following table, where NRep is a number of CSI that is configured to be reported on a PUSCH. Priority 0 is a highest priority, a priority 2NRep is a lowest priority, and CSI reporting n corresponds to an nth minimum Prii, CSI(y, k, s) value in NRep pieces of CSI reporting.

An overall arrangement sequence is that: wideband CSI is placed foremost, and then arrangement is performed according to a priority sequence. For each priority, arrangement is performed according to a sequence of first even subbands CSI and then odd subbands CSI.

Currently, the NES project considers that (L1/L2) signaling enable port adaptation signaling enable port adaptation of a higher layer is to be sent, but a problem that an energy saving index is unreliable exists. For example, when UE reports a plurality of pieces of CSI according to an indication of a network side, there is a scenario in which the network side indicates the UE to report two pieces of CSI, but the UE does not receive the indication from a network side device and still reports previously configured single CSI. In this case, the network side device may not be able to parse out content reported by the UE. Therefore, when reporting CSI, the UE preferably carries an indication identifier (the indication information may tell a base station based on which assumption the CSI is obtained).

When the UE reports a plurality of pieces of CSI, the plurality of pieces of CSI may be directly stacked according to a sequence. However, currently, except for a plurality of pieces of CSI of NCJT, there is no sorting rule for CSI of different measurement assumptions. In addition, to reduce some reporting overheads, some simplification of content reported in a case that a specific condition is met may be considered. For example, a plurality of CQIs s in a plurality of pieces of CSI may be optimized in a differential form relative to a baseline CQI. Alternatively, a plurality of pieces of CSI in a same beam direction may be simplified or the like.

An application scenario of multiple channel state information (Channel State Information, CSI) includes the following several items: 1. The UE first reports a plurality of pieces of CSI for different measurement assumptions (that is, different numbers of ports/muting patterns) for reference by a network side device (for example, a base station), and then the base station makes a port adaptation (port adaptation) decision. 2. The base station first performs port adaptation. A CSI tracking tracking is inaccurate within a period of time before ON/OFF of port adaptation. The UE may report a plurality of pieces of CSI for different measurement assumptions for reference by the base station.

In the foregoing scenario, it may lead to a problem that the UE reports a plurality of pieces of CSI at the same time with excessive overheads. Embodiments of this application provide a CSI sending method, which is designed with a CSI compression rule, a CPU calculation rule, and the like, and the CSI sent by the UE can be normally interpreted by the network side device without receiving an indication from the network side device, thereby reducing the overheads.

With reference to the accompanying drawings, the following describes in detail a CSI sending method provided in embodiments of this application by using some embodiments and application scenarios thereof.

An embodiment of this application provides a CSI sending method. FIG. 4 is a flowchart of a CSI sending method according to an embodiment of this application. As shown in FIG. 4, the CSI sending method provided in this embodiment of this application may include the following step 201.

Step 201: User equipment UE sends a plurality of pieces of first CSI to a network side device according to a first form.

In this embodiment of this application, the plurality of pieces of first CSI are CSI for different measurement assumptions.

The first form includes at least one of the following:
feeding back one CSI report, where the CSI report includes the plurality of pieces of first CSI; or
feeding back a plurality of CSI reports, where one CSI report includes at least one piece of first CSI.

An embodiment of this application provides a CSI sending method. UE sends a plurality of pieces of first CSI to a network side device according to a first form, where the plurality of pieces of first CSI are CSI for different measurement assumptions; and the first form includes at least one of the following: feeding back one CSI report, where the CSI report includes the plurality of pieces of first CSI; or feeding back a plurality of CSI reports, where one CSI report includes at least one piece of first CSI. A purpose of reporting the plurality of pieces of first CSI by the UE is that the plurality of pieces of first CSI are latest CSI obtained for different measurement assumptions. After the network side device has the plurality of pieces of latest CSI based on different measurement assumptions, it is more convenient to schedule data information according to a requirement, and the plurality of pieces of first CSI help the network side device make a more effective antenna muting decision.

Optionally, in this embodiment of this application, step 201 may be specifically implemented by using the following step 201a.

Step 201a: The UE feeds back the plurality of pieces of first CSI to the network side device according to the first form in a case that a first trigger condition is met.

The first trigger condition includes at least one of the following: the network side device indicates the UE to feed back the plurality of pieces of first CSI; the network side device configures the UE to feed back the plurality of pieces of first CSI; and the network side device activates M measurement assumptions corresponding to the first CSI, where M is an integer greater than 0.

Optionally, in this embodiment of this application, the measurement assumption corresponding to the first CSI includes at least one of the following:
a reference signal resource;
a reference signal resource set;
a power offset value;
a number of ports configuration corresponding to the reference signal resource;
a number of ports configuration corresponding to the reference signal resource set;
a port shutdown pattern corresponding to the reference signal resource;
a port shutdown pattern corresponding to the reference signal resource set;
a port muting muting pattern corresponding to the reference signal resource; and
a port muting muting pattern corresponding to the reference signal resource set.

Optionally, in this embodiment of this application, the UE may send the CSI according to an indication from the network side device in a case of receiving the indication from the network side device. For example, the network side device may directly indicate the UE to report or not to report a plurality of pieces of first CSI (multi-CSI), and directly indicate the UE to report or not to report a number of sent first CSI.

Optionally, in this embodiment of this application, the UE may perform determining according to a number of CSI associated with the measurement assumption corresponding to the first CSI and activated by the network side device. If M measurement assumptions are activated, an equal number of CSI is reported, that is, M pieces of CSI are reported.

Optionally, in this embodiment of this application, the UE may send the CSI according to a configuration by the network side device in a case of receiving the configuration by the network side device. For example, in a case that the network side device configures a CSI report mode by using RRC, for example, configures mode1 for reporting according to a legacy form, and configures mode2 for reporting according to a multi-CSI form, the UE may send the CSI according to the CSI report mode.

Optionally, in this embodiment of this application, each of the plurality of pieces of first CSI includes at least one of the following: a CSI identifier and simplified CSI information.

The CSI identifier includes at least one of the following:
an identifier of the first CSI;
a reference signal resource indicator;
a non-zero power channel state information reference signal resource set identifier;
a channel state information resource configuration identifier;
a group identifier of a non-zero power channel state information reference signal resource group;
a CSI report configuration identifier;
a port muting muting pattern identifier;
an identifier corresponding to a number of ports configuration; and
an identifier corresponding to a power offset value; and
the identifier of the first CSI is used to distinguish between the plurality of pieces of first CSI.

Optionally, in this embodiment of this application, the identifier of the first CSI is in a mapping association relationship with one or more of the following first information; and the first information includes at least one of the following:
non-zero power channel state information reference signal resource set information that needs to be measured by the first CSI;
non-zero power channel state information reference signal resource information or non-zero power channel state information reference signal resource group information that needs to be measured by the first CSI;
channel state information resource configuration information associated with the first CSI;
port muting muting pattern identifier information during measurement by the first CSI;
port shutdown shutdown pattern identifier information during measurement by the first CSI;
number of ports configuration information during measurement by the first CSI; and
power offset value information;
the mapping association relationship is configurable by the network side device; or specified in an implicit rule.

Optionally, in this embodiment of this application, in a case that the mapping association relationship is configured by the network side device, the network side device configures, through RRC, a mapping between a CSI Id and the first information.

For example, in a case that the network side configures the UE through RRC that a CSI identifier reported for 32 ports is CSI Id=0, a CSI identifier reported for 16 ports is CSI Id=1, ..., the UE only needs to report a corresponding CSI Id, and the base station knows based on which number of ports assumption the CSI is obtained.

For another example, in a case that it is configured through RRC that a CSI identifier reported for poweroffset1 is CSI Id=0 and a CSI identifier reported for poweroffset2 is CSI Id=1, the UE only needs to report a corresponding CSI Id.

Optionally, in this embodiment of this application, the implicit rule includes at least one of the following:
1. It is specified that in the plurality of pieces of first CSI, identifiers of the first CSI are one-to-one mapped to CSI-RS resource set identifiers correspondingly measured by the first CSI.

For example, it is specified that in a plurality of pieces of CSI, sizes of CSI Ids are one-to-one mapped to sizes of measured resource set Ids corresponding to the CSI in ascending/descending order. The resource set Id may be:
nzp-CSI-RS-ResourceSet corresponding to resourcesForChannelMeasurement and associated with CSI-ResourceConfigId;
nzp-CSI-RS-ResourceSet corresponding to csi-IM-ResourcesForInterference and associated with CSI-ResourceConfigId; and
nzp-CSI-RS-ResourceSet corresponding to nzp-CSI-RS-ResourcesForInterference and associated with CSI-ResourceConfigId.

2. It is specified that in the plurality of pieces of first CSI, the identifiers of the first CSI are one-to-one mapped to associated CSI resource configuration identifiers.

For example, it is specified that in a plurality of pieces of CSI, sizes of CSI Ids are one-to-one mapped to sizes of associated Resource Config Ids in ascending/descending order, where resource config may be:
CSI-ResourceConfigId corresponding to resourcesForChannelMeasurement;
CSI-ResourceConfigId corresponding to csi-IM-ResourcesForInterference; and
CSI-ResourceConfigId corresponding to nzp-CSI-RS-ResourcesForInterference.

The network side device configures N power offset values, and it is specified that the identifiers of the first CSI are one-to-one mapped to the power offset values, where N is an integer greater than 0.

3. The network side device configures N port shutdown patterns, and it is specified that the identifiers of the first CSI are one-to-one mapped to identifier values of the shutdown patterns, where N is an integer greater than 0.

For example, the network side configures N power offsets, and indicates the UE to report CSI for the N power offsets. It is specified that sizes of CSI Ids are one-to-one mapped to sizes of power offsets. That is, CSI whose CSI Id is 0 corresponds to CSI whose value is the smallest in the power offsets, and CSI whose CSI Id is 1 corresponds to CSI whose value is the second smallest in the power offsets ...

Optionally, in this embodiment of this application, the CSI-RS resource set identifier may include at least one of the following:
a non-zero power channel state information reference signal resource set identifier associated with a channel state information resource configuration used for channel measurement;
a non-zero power channel state information reference signal resource set identifier associated with a channel state information resource configuration used for interference measurement; and
a non-zero power channel state information reference signal resource set identifier associated with a channel state information resource configuration used for interference measurement in a multi-user multiple-input multiple-output (Multi-User Multiple-Input Multiple-Output, MU-MIMO) scenario;
the CSI resource configuration identifier may include at least one of the following:
   a channel state information resource configuration identifier used for channel measurement;
   a channel state information resource configuration identifier used for interference measurement; and
   a channel state information resource configuration identifier used for interference measurement in a MU-MIMO scenario;
   the N power offset values are used to indicate the UE to report CSI for the N power offset values; and
   the N port shutdown patterns are used to indicate the UE to report CSI for the N port shutdown patterns.

Optionally, in this embodiment of this application, the non-zero power channel state information reference signal resource set identifier is reported by using a direct indication and/or a bitmap bitmap indication.

Optionally, in this embodiment of this application, the UE may directly indicate an Id, that is, reported CSI carries an Id of a resource set measured by the CSI. Therefore, the network side device may learn based on which resource set the CSI is measured.

Optionally, in this embodiment of this application, the UE may alternatively give an indication by using a bitmap Bitmap.

For example, in a case that the UE is indicated to activate two NZP-CSI-RS-ResourceSets, if the reported CSI identifier is '10', it indicates that the CSI is CSI measured for an NZP-CSI-RS-ResourceSet with a smaller ID in the two activated NZP-CSI-RS-ResourceSets. If the CSI identifier is '01', it indicates that the CSI is CSI measured for an NZP-CSI-RS-ResourceSet with a larger ID in the activated NZP-CSI-RS-ResourceSets.

Optionally, in this embodiment of this application, the channel state information resource configuration identifier is reported by using a direct indication and/or a bitmap bitmap indication.

Optionally, in this embodiment of this application, the UE may report the channel state information resource configuration identifier in a manner of directly indicating an Id or in a manner of indicating a bitmap.

For example, if reported CSI carries an Id of a CSI-Resource Config associated with the CSI, the network side device may learn based on a CSI-RS of which Resource Config the CSI is measured.

Optionally, in this embodiment of this application, the group identifier of the non-zero power channel state information reference signal resource group is reported by using a direct indication and/or a bitmap bitmap indication.

Optionally, in this embodiment of this application, for a muting pattern Id, reporting may be performed according to a stipulation in a protocol.

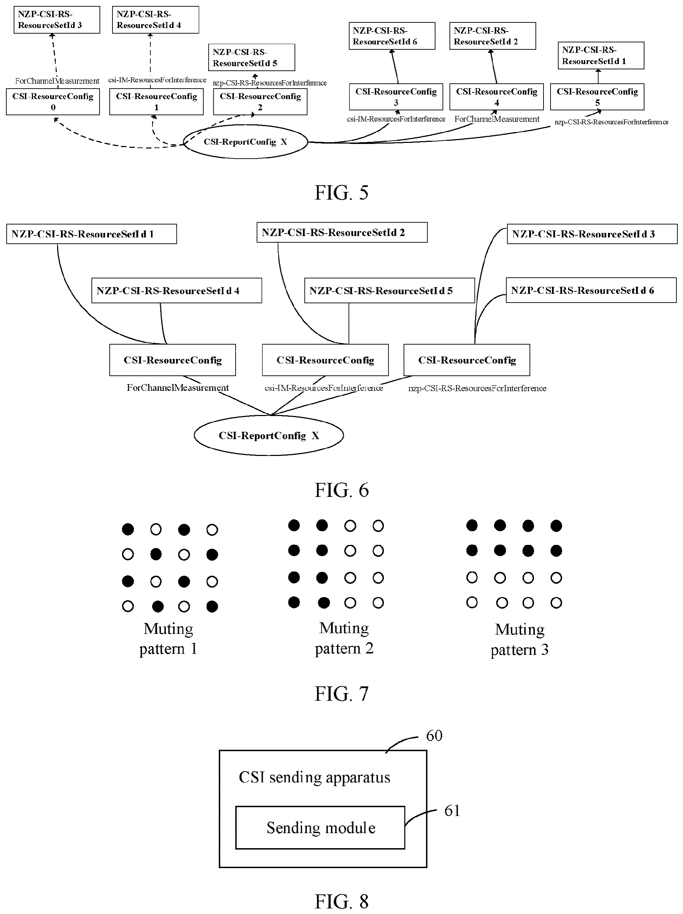

For example, FIG. 7 is a schematic diagram of a muting pattern according to an embodiment of this application. As shown in FIG. 7, black represents a disabled port, white represents a still enabled port, and different muting patterns represent different port on/off states. If Ids corresponding to different muting patterns are specified in a protocol as shown in FIG. 7, and Ids of different muting patterns represent different port on/off states, when reporting CSI, the UE may directly carry an Id of a measured muting pattern corresponding to the CSI, that is, distinguish a plurality of pieces of reported CSI by using the Ids of the muting patterns.

Optionally, in this embodiment of this application, for CSI obtained according to different number of ports configurations, when reporting the plurality of pieces of CSI, the UE may carry an Id corresponding to a number of ports configuration of a measured reference signal resource corresponding to the CSI.

For example, if it is specified in a protocol that, 32ports has a number of ports configuration Id1, and 16ports has a number of ports configuration Id2, when reporting a plurality of pieces of CSI, the UE may directly carry the number of ports configuration Id, and the base station knows for which number of ports configuration the CSI is obtained.

Optionally, in this embodiment of this application, the first CSI includes a CSI part 1 and a CSI part 2; and the identifier of the first CSI is carried in the CSI part 1; or a bit of the identifier of the first CSI is independently coded; and
a bit number of the identifier of the first CSI is determined according to a first number;
where the first number includes at least one of the following:
   a number of non-zero power channel state information reference signal resource sets associated with a CSI report to which the first CSI belongs;
   a number of channel state information resource configurations associated with the CSI report to which the first CSI belongs;
   a number of non-zero power reference signal resources associated with the CSI report to which the first CSI belongs; and
   a number of non-zero power channel state information reference signal resource groups associated with the CSI report to which the first CSI belongs.

Optionally, in this embodiment of this application, the power offset value is a power offset value between a physical downlink shared channel PDSCH and a channel state information reference signal CSI-RS, that is, power offset values between PDSCH and CSI-RS NZP-CSI-RS-ResourceSetId.

Optionally, the CSI sending method provided in this embodiment of this application further includes the following step 301.

Step 301: The UE simplifies the plurality of pieces of first CSI according to second information and a first decision criterion.

In this embodiment of this application, the second information includes at least one of the following:
payload information of resources carried in the plurality of pieces of first CSI;
number information of the plurality of pieces of first CSI;
measurement assumption information of the plurality of pieces of first CSI;
power offset value information corresponding to the plurality of pieces of first CSI;
measurement resource information of the plurality of pieces of first CSI;
rank information of the plurality of pieces of first CSI;
port muting muting pattern or port shutdown pattern information corresponding to the plurality of pieces of first CSI; and
beam direction information corresponding to measurement resources corresponding to the plurality of pieces of first CSI.

Optionally, in this embodiment of this application, the UE may determine, according to payload adequacy, whether to simplify or compress the CSI. For example, the UE may compress the first CSI in a case that the payload is insufficient.

Optionally, in this embodiment of this application, the UE may determine, according to a number of reported first CSI, whether to perform compression. For example, the UE may compress the first CSI when the number of reported first CSI is greater than a preset threshold number.

Optionally, in this embodiment of this application, the UE may determine whether to compress the first CSI according to measurement assumptions of a plurality of pieces of first CSI that are triggered, or determine, according to power offsets corresponding to a plurality of pieces of first CSI, whether to compress the first CSI. For example, the UE may compress first CSI with a difference between power offsets being less than a specific value.

Optionally, in this embodiment of this application, the UE may determine, according to measurement resources/resource sets corresponding to a plurality of pieces of first CSI, whether to compress the CSI.

For example, if numbers of ports of resources/resource sets measured by the plurality of pieces of first CSI are the same, the UE may compress the plurality of pieces of CSI.

For example, if muting patterns corresponding to the plurality of pieces of first CSI have an inclusion/subordinate subset relationship, compression may be performed.

For example, if beam directions corresponding to the plurality of pieces of first CSI are the same, compression may be performed.

For example, if CRIs (CSI-RS Resource Indicator) corresponding to the plurality of pieces of first CSI are the same, compression may be performed.

For example, if a difference between CRIs (CSI-RS Resource Indicator) corresponding to the plurality of pieces of first CSI is less than or equal to a threshold, and the threshold herein may be 1 or 2, compression may be performed.

For example, if an angle difference between beam directions corresponding to CRIs (CSI-RS Resource Indicator) corresponding to the plurality of pieces of first CSI is less than or equal to a threshold, and the threshold herein may be 15 degrees or 30 degrees, compression may be performed.

It should be noted that the foregoing condition may be configured by the network side device or specified in advance in a protocol, that is, the network side device configures or the protocol specifies a condition on which CSI compression is triggered/not triggered. It may also be determined by the UE side, but a decision criterion is configured in advance by the network side or specified in advance in a protocol.

It should be noted that the foregoing 'compression' refers to simplifying a plurality of pieces of CSI. A simplification manner includes: Each piece of CSI reduces bits, or a plurality of pieces of CSI share one field, but another field is reported normally.

Optionally, in this embodiment of this application, the first decision criterion includes at least one of the following:
payloads of the resources carried in the plurality of pieces of first CSI are less than a threshold;
a number of the plurality of pieces of first CSI is greater than a threshold;
measurement assumptions corresponding to the plurality of pieces of first CSI are greater than a threshold;
a difference between power offset values corresponding to the plurality of pieces of first CSI is less than a threshold;
the measurement resources corresponding to the plurality of pieces of first CSI have a same measurement assumption;
ranks corresponding to the plurality of pieces of first CSI are the same;
port muting muting patterns corresponding to the plurality of pieces of first CSI have an inclusion/subordinate subset relationship;
the measurement resources corresponding to the plurality of pieces of first CSI are the same;
beam directions corresponding to the measurement resources corresponding to the plurality of pieces of first CSI are the same; and
an angle difference between the beam directions corresponding to the measurement resources corresponding to the plurality of pieces of first CSI is less than a threshold; and
the first decision criterion is configured by the network side device or specified in advance in a protocol, and the threshold is configured by the network side device or specified in advance in a protocol.

It should be noted that the threshold includes a plurality of different thresholds.

For example, for first CSI of different power offsets, a differential CQI may be reported. For example, CSI1 is obtained for power offset1, CSI2 is obtained based on power offset2, and CSI3 is obtained based on power offset3. If RIs/PMIs of the three pieces of CSI are the same, the CQI may be reported in a differential form. For example, a CQI of CSI1 is used as baseline, and is completely reported. Then, a differential CQI may be given for a CQI of CSI2 based on CSI1, and overheads are reduced during reporting. A differential CQI may also be given for a CQI of CSI3 based on CSI1.

For another example, a plurality of pieces of first CSI are reported for a plurality of different power offsets, and it may be specified that when a difference between configuration values of the two is less than X dB, CSI of the two may be compressed. For example, it may be considered that in this case, ranks are the same, and only one time of reporting is needed. X may be configured by the network side or specified in a protocol, or may be dynamically indicated and adjusted by the network side.

For another example, a plurality of pieces of first CSI are reported for a plurality of different power offsets, and it may be specified that when a difference between configuration values of the two is less than X dB, other CSI fields of the two than the CQI are the same, and only one time of reporting is needed. X may be configured by the network side or specified in a protocol, or may be dynamically indicated and adjusted by the network side.

For another example, for a case that a plurality of pieces of first CSI are reported for a plurality of different port shutdown patterns, it may be specified that when CRIs selected by the plurality of pieces of first CSI are the same, or a value of the CRI is less than a specific threshold, the PMI may be calculated and reported only once. In this case, computing and reporting overheads of the UE are also reduced, and a remaining CSI field is normally reported.

It should be noted that, in a case that the UE is in a cell center, when the network side indicates to report CSI for two power offsets poweroffeset1 and the poweroffset2, and it is specified that the two are less than X dB, the two pieces of first CSI may be compressed. When the UE moves to a cell edge, it may be indicated that CSI compression may be performed when a difference between the power offsets is less than Y dB. Y is less than X, and the reason is that when the UE is in the cell center, a plurality of pieces of CSI for different power offsets may have little difference in terms of content. In this case, the plurality of pieces of CSI may have a relatively large amount of content to share. When the UE is near the cell edge, CSI reporting content corresponding to a difference of several dB may have a large difference. Therefore, an amount of content that can be shared in the plurality of pieces of first CSI is relatively small.

For another example, if a QCL relationship exists between measurement resources/resource sets of a plurality of pieces of first CSI, PMIs in the plurality of pieces of first CSI may be reported only once, and remaining PMIs are omitted for reporting. Alternatively, if measurement resources/resource sets corresponding to a plurality of pieces of first CSI are the same, PMIs may be reported only once. Alternatively, if ranks of a plurality of pieces of first CSI are the same, PMIs may be reported only once, and remaining PMIs may be omitted. Alternatively, if beam directions of measurement resources corresponding to a plurality of pieces of first CSI are the same, PMIs may be reported only once, and remaining PMIs may be omitted.

Optionally, the CSI sending method provided in this embodiment of this application further includes the following step 401.

Step 401: The UE determines a first physical uplink control channel PUCCH resource according to third information.

In this embodiment of this application, the first PUCCH resource is used to send a plurality of pieces of first CSI.

The third information includes at least one of the following:
number information of the plurality of pieces of first CSI;
total bit information of the plurality of pieces of first CSI;
CSI identifier information of the plurality of pieces of first CSI; and
number information of activated non-zero power channel state information reference signal resource sets associated with the plurality of pieces of first CSI, number information of CSI resource configurations, and number information of non-zero power channel state information reference signal resources;
a mapping association relationship exists between the third information and the first PUCCH resource; and
the mapping association relationship is configured by using higher layer signaling or indicated by layer-1 or layer-2 signaling or specified in advance in a protocol.

Optionally, in this embodiment of this application, in a case that the UE is indicated to report a plurality of pieces of first CSI, the UE may determine the first PUCCH according to a number of reported first CSI. That is, a CSI number is associated with a PUCCH resource.

For example, if the network side indicates the UE to report a single piece of first CSI, the UE may perform reporting on PUCCH Resource1. If the network side indicates the UE to report two pieces of first CSI, the UE may perform reporting on PUCCH Resource2. If the network side indicates the UE to report three pieces of first CSI, the UE may perform reporting on PUCCH Resource3. That is, there is a mapping relationship between a number of CSI and a number of a PUCCH resource.

Optionally, in this embodiment of this application, in a case that the UE is indicated to report first PUCCH resources of a plurality of pieces of first CSI, the first PUCCH resources may be determined according to a total number of bits reported by the first CSI (refer to determining of an SPS PUCCH resource, SPS-PUCCH-AN-List).

For example, if a total bit number of a plurality of pieces of first CSI that are to be reported by the UE is in a range of an interval 1, a first entry in a configured PUCCH resource table is referenced, that is, the plurality of pieces of first CSI may be uploaded by using a resource of the first entry in the PUCCH resource table. When the total bit number is in a range of an interval 2, a second entry in the configured PUCCH resource table is referenced, where the PUCCH resource table is a resource that is configured in advance by the network and that can be used for uplink CSI transmission.

Optionally, in this embodiment of this application, in a case that the UE is indicated to report first PUCCH resources of a plurality of pieces of first CSI, a number of PUCHH resources may be determined according to a number of activated NZP-CSI-RS-ResourceSet and CSI-ResourceConfig.

For example, if one CSI-ReportConfig is associated with a plurality of CSI-ResourceConfig, or one CSI-ReportConfig is associated with one CSI-ResourceConfig, and the CSI-ResourceConfig is associated with a plurality of NZP-CSI-RS-ResourceSet, the network side configures a PUCCH resource according to a number of activated CSI-ResourceConfig/a number of activated NZP-CSI-RS-ResourceSet.

For another example, when a single resource set is activated, CSI is reported on PUCCH resource 1, and when two resource sets are activated, CSI is reported on PUCCH resource2.

Optionally, in this embodiment of this application, in a case that the UE is indicated to report first PUCCH resources of a plurality of pieces of first CSI, the UE may determine the PUCCH resources according to first CSI identifiers, that is, the first CSI identifier has a correspondence with the PUCCH resource.

For example, the UE may receive a PUCCH resource configuration sent by the network side device, and the UE may obtain the PUCCH configuration in the following manner: configuring PUCCH-CSI-ResourceList in CSI-ReportConfig, where each PUCCH-CSI-Resource configuration in the List carries a CSI identifier, which indicates that the PUCCH-CSI-Resource is used to report first CSI corresponding to the CSI identifier. Alternatively, a plurality of PUCCH-ResourceId are indicated in the PUCCH-CSI-Resource, and the plurality of PUCCH-ResourceId are in a one-to-one correspondence with CSI identifiers in ascending order.

Optionally, the CSI sending method provided in this embodiment of this application further includes the following step 501.

Step 501: The UE determines, according to fourth information, number information of channel state information processing units CPUs occupied by the plurality of pieces of first CSI.

The fourth information includes at least one of the following:
number information of activated CSI reference signal resource sets in each CSI feedback report;
number information of CSI reference signal resources activated in the activated CSI reference signal resource set in each CSI feedback report;
number information of power offsets activated in a CSI reference signal resource activated in the activated CSI reference signal resource set in each CSI feedback report; and
port configuration information activated in the CSI reference signal resource activated in the activated CSI reference signal resource set in each CSI feedback report; and
the port configuration information includes a number of ports, a port muting pattern, and a port shutdown pattern.

Optionally, in this embodiment of this application, the UE may determine number information of channel state information processing units CPUs occupied by the plurality of pieces of first CSI according to number information of power offsets activated in each CSI-RS resource, or number information of a CSI-RS resources activated in each CSI-RS resource set, or number information of a CSI-RS resource set activated in each CSI report.

For example, if there are N associated activated CSI-RS resource sets used for channel measurement in one report config, and a number of resources included in each resource set is *n*₁, *n*₂, *n*₃, ...*n_{N}*, a number of CPUs is *O_{CPU} = n*₁ + *n*₂ + *n*₃ + ...*n_{N}*.

Optionally, before step 201, the CSI sending method provided in this embodiment of this application further includes the following step 601.

Step 601: The UE arranges the plurality of pieces of first CSI according to a first arrangement sequence.

In this embodiment of this application, the first arrangement sequence includes at least one of the following:
arranging according to a sequence of identifiers of the plurality of pieces of first CSI;
arranging according to a sequence of bandwidth part identifiers BWP Ids corresponding to CSI resource configuration information associated with the plurality of pieces of first CSI;
arranging according to a sequence of non-zero power channel state information reference signal resource set identifiers associated with the plurality of pieces of first CSI;
arranging according to a sequence of CSI resource configuration identifiers associated with the plurality of pieces of first CSI;
arranging according to a sequence of port muting pattern identifiers associated with the plurality of pieces of first CSI;
arranging according to a sequence of port shutdown pattern identifiers associated with the plurality of pieces of first CSI;
arranging according to a sequence of numbers of ports corresponding to reference signal resources or resource sets associated with the plurality of pieces of first CSI; and
arranging according to a sequence of power offset values corresponding to the reference signal resources or the resource sets associated with the plurality of pieces of first CSI.

Optionally, in this embodiment of this application, no CSI share field exists in the plurality of pieces of first CSI. Before step 201, the CSI method provided in this embodiment of this application further includes the following step 701 or step 801.

Step 701: The UE sequentially arranges each piece of first CSI in the plurality of pieces of first CSI according to the first arrangement sequence.

An arrangement sequence of each field in each piece of first CSI is sorted according to a protocol stipulation.

Optionally, in this embodiment of this application, if no share field exists in the plurality of pieces of first CSI, that is, in a case that no CSI field can be shared in the plurality of pieces of first CSI, the UE may sequentially arrange the plurality of pieces of first CSI according to the first arrangement sequence by using each piece of first CSI as a whole, and an arrangement sequence of each field in each piece of first CSI is sorted according to a stipulation in a current protocol, that is, the plurality of pieces of first CSI as a whole are sorted one by one according to the first arrangement sequence.

Step 801: In a case that no field can be shared in the plurality of pieces of first CSI fields, arrange fields in the plurality of pieces of first CSI fields based on importance of the fields in the first CSI.

A type of CSI fields in each piece of first CSI is arranged according to the first arrangement sequence.

Optionally, in this embodiment of this application, in a case that no share field exists in the plurality of pieces of first CSI, that is, in a case that no CSI field can be shared in the plurality of pieces of first CSI, the UE may first arrange a most important type of CSI fields in all first CSI, for example, CSI field A, and then arrange a second most important type of CSI fields in all the first CSI, for example, CSI field B, until all types of CSI fields of all the first CSI, that is, CSI fields, are arranged. A type of CSI fields of each piece of first CSI, for example, CSI field A is arranged according to the first arrangement sequence. For example, the first arrangement sequence is sorting according to an Id size of a resource set, field A of CSI corresponding to a smallest resource set Id is first arranged, and field A of CSI with a second smallest resource set Id is arranged, until all fields A arranged.

Optionally, in this embodiment of this application, a shared CSI field exists in the plurality of pieces of first CSI. Before step 201, the CSI sending method provided in this embodiment of this application further includes the following step 901.

Step 901: The UE arranges all CSI fields in the plurality of pieces of first CSI according to a second arrangement sequence.

When all the CSI fields in the plurality of pieces of first CSI are sorted, only one piece of first CSI in the plurality of pieces of first CSI includes the share field.

Optionally, in this embodiment of this application, the second arrangement sequence includes at least one of the following:
the share field is arranged before all the CSI fields in the plurality of pieces of first CSI;
the share field is arranged after all the CSI fields in the plurality of pieces of first CSI; and
the share field is arranged according to a sequence of a CSI field in one piece of first CSI.

Optionally, in this embodiment of this application, in a case that a CSI field can be shared in the plurality of pieces of first CSI, that is, only a single share field needs to be reported in the plurality of pieces of first CSI.

Optionally, in this embodiment of this application, in a case that a CSI field can be shared in the plurality of pieces of first CSI, that is, only a single share field needs to be reported in the plurality of pieces of first CSI.

For example, the network side indicates the UE to report two pieces of first CSI, and each piece of first CSI includes four fields ABCD (it should be noted that, each piece of CSI includes more than four fields, and actually, each piece of CSI includes how many fields and a sequence of these fields are specified in a current protocol, that is, a sequence of ABCD in this example is according to the current protocol, where A1 represents field A of CSI1, and A2 represents field A of CSI2). The field that can be shared may be arranged according to an original sequence, or may be placed in a last or foremost position of all CSI. In this example, two pieces of first CSI have one share field C, and each piece of first CSI includes: Normal field A, Normal field B, and Normal field D. The fields in the two pieces of first CSI may be sorted in the following manner:
1. Normal field A 1, Normal field B 1, share field C, Normal field D 1; Normal field A 2, Normal field B 2, Normal field D 2. That is, the share field of the two pieces of first CSI is sent only once, and is arranged according to an arrangement sequence of the first piece of first CSI.
2. Normal field A 1, Normal field B 1, Normal field D 1; Normal field A 2, Normal field B 2, Normal field D 2; share field C. That is, the share field of the two pieces of first CSI is sent only once, and is arranged at the end of all the first CSI. In addition, a remaining part of the first CSI is first arranged, and then another part of the second CSI is arranged.
3. Normal field A 1, Normal field A 2, Normal field B 1, Normal field B 2, Normal field D 1, Normal field D 2, share field C. That is, the share field of the two pieces of first CSI is sent only once, and is arranged at the end of all the first CSI. In addition, the first field, that is, field A, of each CSI is first arranged, and the second field, that is, field B, of each CSI is then arranged.
4. share field C, Normal field A 1, Normal field A 2, Normal field B 1, Normal field B 2, Normal field D 1, Normal field D 2. That is, the share field of the two pieces of first CSI is sent only once, and is arranged at the foremost position of all the first CSI. In addition, the first field, that is, field A, of each CSI is arranged first, and the second field, that is, field B, of each CSI is then arranged.
5. share field C; Normal field A 1, Normal field B 1, Normal field D 1; Normal field A 2, Normal field B 2, Normal field D 2. That is, the share field of the two pieces of first CSI is sent only once, and is arranged at the foremost position of all the first CSI. In addition, a remaining part of the first CSI is first arranged, and then another part of the second CSI is arranged.

Optionally, the CSI method provided in this embodiment of this application further includes the following step 101 and step 102.

Step 101: The UE first arranges, in a case that each of the plurality of pieces of first CSI includes a CSI part 1 and a CSI part 2, the CSI part 1 and then arranges the CSI part 2 according to a target priority determining rule.

For example, the UE may first arrange CSI1 with higher importance, and then arrange CSI2 with lower importance than that of CSI1.

Step 102: The UE discards, in a case that a resource allocated by the network side device cannot be used to completely send the plurality of pieces of first CSI, the CSI part 2 in second CSI according to the target priority rule.

In this embodiment of this application, the second CSI is a part of first CSI in the plurality of pieces of first CSI.

For example, the UE discards CSI part2 of some first CSI with a lower priority according to a priority order.

The target priority determining rule is related to at least one of the following content:
information about an NZP CSI-RS resource set associated with each piece of first CSI;
CSI resource configuration information associated with each piece of first CSI;
information about an NZP CSI RS resource or an NZP CSI RS resource group associated with each piece of first CSI;
port configuration information corresponding to a reference signal resource associated with each piece of first CSI;
port configuration information corresponding to a reference signal resource set associated with each piece of first CSI;
port muting pattern/shutdown pattern information corresponding to the reference signal resource associated with each piece of first CSI;
port muting pattern/shutdown pattern information corresponding to the reference signal resource set associated with each piece of first CSI;
power offset information corresponding to the reference signal resource associated with each piece of first CSI; and
power offset information corresponding to the reference signal resource set associated with each piece of first CSI; and
the target priority determining rule may be indicated by a network side, or may be specified in advance in a protocol.

Optionally, in this embodiment of this application, it may be learned from the foregoing content that, in a case that the UE arranges the plurality of pieces of first CSI, the following two manners may be used.

### Manner 1:

The UE stacks legacy CSI fields and does not compress the plurality of pieces of first CSI.

In an example of manner 1, CSI Part1 is used as an example. A stacking manner of CSI Part1 is as follows: A whole CSI part1 is used as a granularity for stacking.

Table 1 is a schematic table of a CSI report according to an embodiment of this application. As shown in Table 1, CSI fields included in the CSI report may include:

**Table 1**

| CSI report number | CSI fields |
|---|---|
| CSI report #n | CRI, if reported |
| | Rank Indicator, if reported |
| | Wideband CQI for the first TB, if reported |
| | Subband differential CQI for the first TB with increasing order of subband number, if reported |
| | PMI wideband information fields X1, if reported |
| | PMI wideband information fields X2, if reported |
| | Wideband CQI for the first TB, if reported |
| | CRI, if reported |
| | Rank Indicator, if reported |
| | Wideband CQI for the first TB, if reported |
| | Subband differential CQI for the first TB with increasing order of subband number, if reported |
| | PMI wideband information fields X1, if reported |
| | PMI wideband information fields X2, if reported |
| | Wideband CQI for the first TB, if reported |
| | CRI, if reported |
| | Rank Indicator, if reported |
| | Wideband CQI for the first TB, if reported |
| | Subband differential CQI for the first TB with increasing order of subband number, if reported |
| | PMI wideband information fields X1, if reported |
| | PMI wideband information fields X2, if reported |
| | Wideband CQI for the first TB, if reported |
| ... | |

As shown in Table 1, three pieces of CSI are used as an example. Lines 1 to 7, lines 8 to 14, and lines 15 to 21 of CSI fields included are respectively CSI obtained through calculation for three port muting patterns/three NZP-CSI-RS Resource Sets/three CSI-ResourceConfig/three NZP-CSI-RS Resource (groups), and an arrangement sequence of each piece of indication information in each piece of CSI is specified according to an existing protocol.

Table 2 is a schematic table of a CSI report according to an embodiment of this application. As shown in Table 2, two pieces of first CSI are used as an example, and CSI fields included in the CSI report may include:

**Table 2**

| CSI report number | CSI fields |
|---|---|
| | CRI, if associated with one CSI-RS resource set, numberOfNES-CSI= 1 and if reported; |
| | First CRI, if associated with one CSI-RS resource set, numberOfNES-CSI= 2 and if reported |
| | Rank Indicator associated with CRI, if numberOfNES-CSI= 1 and if reported; |
| | Rank Indicator associated with the first CRI as in Tables 6.3.1.1.2-3B, if numberOfNES-CSI= 2 and if reported |
| | Wideband CQI associated with CRI for the first TB, if numberOfNES-CSI= 1 and if reported; |
| | Wideband CQI associated with the first CRI for the first TB, if numberOfNES-CSI= 2 and if reported |
| | Subband differential CQI associated with CRI for the first TB with |
| | increasing order of subband number, if numberOfNES-CSI= 1 if reported; |
| | Subband differential CQI associated with the first CRI for the first TB with increasing order of subband number, if numberOfNES-CSI= 2 and if reported |
| | Second CRI as in Tables 6.3.1.1.2-3B, if associated with one CSI-RS resource set, numberOfNES-CSI= 2 and if reported |
| | Rank Indicator associated with the second CRI, if numberOfNES-CSI= 2 and if reported |
| | Wideband CQI associated with the second CRI for the first TB, if numberOfNES-CSI= 2 and if reported |
| | Subband differential CQI associated with the second CRI for the first TB with increasing order of subband number, if numberOfNES-CSI= 2 and if reported |
| Note: Subbands for given CSI report n indicated by the higher layer parameter csi-ReportingBand are numbered continuously in the increasing order with the lowest subband of csi-ReportingBand as subband 0. | |

In still another example of manner 1, CSI Part1 is used as an example: A stacking manner is a CRI of the first piece of first CSI, a CRI of the second piece of first CSI, a CRI of the third piece of first CRI ... + an RI of the first piece of first CSI, an RI of the second piece of first CSI, an RI of the third piece of first CRI ...

Table 3 is a schematic table of a CSI report according to an embodiment of this application. As shown in Table 3, CSI fields included in the CSI report may include:

**Table 3**

| CSI report number | CSI fields |
|---|---|
| CSI report #n | CRI, if reported |
| | CRI, if reported |
| | CRI, if reported |
| | Rank Indicator, if reported |
| | Rank Indicator, if reported |
| | Rank Indicator, if reported |
| | Wideband CQI for the first TB, if reported |
| | Wideband CQI for the first TB, if reported |
| | Wideband CQI for the first TB, if reported |
| | Subband differential CQI for the first TB with increasing order of subband number, if reported |
| | Subband differential CQI for the first TB with increasing order of subband number, if reported |
| | Subband differential CQI for the first TB with increasing order of subband number, if reported |
| | PMI wideband information fields X1, if reported |
| | PMI wideband information fields X1, if reported |
| | PMI wideband information fields X1, if reported |
| | PMI wideband information fields X2, if reported |
| | PMI wideband information fields X2, if reported |
| | PMI wideband information fields X2, if reported |
| | Wideband CQI for the first TB, if reported |
| | Wideband CQI for the first TB, if reported |
| | Wideband CQI for the first TB, if reported |
| ... | |

It may be learned from Table 3 that, in still another example of manner 1, a CRI of each piece of first CSI may be first arranged, an RI of each piece of first CSI is then arranged, and then a wideband CQI of each piece of first CSI is arranged ...

Manner 2: RIs/CQIs/PMIs in a plurality of pieces of first CSI can be shared.

The CSI report mode of the UE may be configured by the network side device through RRC. For example, a new RRC parameter is configured in CSI-ReportConfig. When nes-CSI-ReportMode=0, the report is legacy CSI reporting. When nes-CSI-ReportMode=1, the report reports a plurality of pieces of CSI for different power offsets. When nes-CSI-ReportMode=2, the report reports a plurality of pieces of CSI for different port configurations (for example, different muting patterns/different numbers of ports).

Optionally, in this embodiment of this application, a CSI number of the plurality of pieces of first CSI reported may also be configured through RRC, for example, a new RRC parameter numberOfNES-CSI is configured in CSI-ReportConfig. When numberOfNES-CSI=1, it refers to reporting a single piece of CSI, and when numberOfNES-CSI=2, it refers to reporting two pieces of CSI ...

In a first example of manner 2, the UE reports CSI for two power offsets with nes-CSI-ReportMode=1 and numberOfNES-CSI=2, and content of the first CSI is completely reported. One or more of the following content in a CSI Field of remaining CSI may be omitted: CRI, RI, CQI, Wideband CQI, Subband Differential CQI, LI, and PMI.

For example, Table 4 is a schematic table of a CSI report according to an embodiment of this application. As shown in Table 4, that the CQI is omitted is used as an example. The CQI needs to be reported only in the first piece of first CSI, and the CQI in the second piece of first CSI is omitted. CSI fields included in the CSI report may include:

**Table 4**

| CSI report number | CSI fields |
|---|---|
| CSI report #n | CRI, if associated with one CSI-RS resource set, numberOfNES-CSI= 1 and if reported; |
| | First CRI, if associated with one CSI-RS resource set, numberOfNES-CSI= 2 and if reported |
| | Rank Indicator associated with CRI, if numberOfNES-CSI= 1 and if reported; |
| | Rank Indicator associated with the first CRI as in Tables 6.3.1.1.2-3B, if numberOfNES-CSI= 2 and if reported |
| | Wideband CQI associated with the first CRI for the first TB, if numberOfNES-CSI= 2 and if reported |
| | Subband differential CQI associated with CRI for the first TB with increasing order of subband number, if numberOfNES-CSI= 1 if reported; |
| | Subband differential CQI associated with the first CRI for the first TB with increasing order of subband number, if numberOfNES-CSI= 2 and if reported |
| | Second CRI as in Tables 6.3.1.1.2-3B, if associated with one CSI- |
| | RS resource set, numberOfNES-CSI= 2 and if reported |
| | Rank Indicator associated with the second CRI, if numberOfNES-CSI= 2 and if reported |
| | Subband differential CQI associated with the second CRI for the first TB with increasing order of subband number, if numberOfNES-CSI= 2 and if reported |
| Note: Subbands for given CSI report n indicated by the higher layer parameter csi-ReportingBand are numbered continuously in the increasing order with the lowest subband of csi-ReportingBand as subband 0. | |

For example, Table 5 is a schematic table of a CSI report according to an embodiment of this application. As shown in Table 5, that the CQI is omitted is used as an example. The CQI needs to be reported only in the first piece of first CSI, and the CQI in the second piece of first CSI reports an offset (offset) reported by a previous CQI. For example, a CQI Index of the first piece of first CSI is 9='1001'. The CQI of the second piece of first CSI actually wants to report CQI Index 11='1011'. A CQI of 4 bits originally needs to be reported. If an offset of Index11 relative to Index9 is 2, only two bits of '10' need to be reported. CSI fields included in the CSI report may include:

**Table 5**

| CSI report number | CSI fields |
|---|---|
| CSI report #n | CRI, if associated with one CSI-RS resource set, numberOfNES-CSI= 1 and if reported; |
| | First CRI, if associated with one CSI-RS resource set, numberOfNES-CSI= 2 and if reported |
| | Rank Indicator associated with CRI, if numberOfNES-CSI= 1 and if reported; |
| | Rank Indicator associated with the first CRI as in Tables 6.3.1.1.2-3B, if numberOfNES-CSI= 2 and if reported |
| | Wideband CQI associated with CRI for the first TB, if numberOfNES-CSI= 1 and if reported; |
| | Wideband CQI associated with the first CRI for the first TB, if |
| | numberOfNES-CSI= 2 and if reported |
| | Subband differential CQI associated with CRI for the first TB with increasing order of subband number, if numberOfNES-CSI= 1 if reported; |
| | Subband differential CQI associated with the first CRI for the first TB with increasing order of subband number, if numberOfNES-CSI= 2 and if reported |
| | Second CRI as in Tables 6.3.1.1.2-3B, if associated with one CSI-RS resource set, numberOfNES-CSI= 2 and if reported |
| | Rank Indicator associated with the second CRI, if numberOfNES-CSI= 2 and if reported |
| | Relative value/offset of Wideband CQI associated with the second CRI for the first TB compared with the Wideband CQI associated with the first CRI for the first TB, if numberOfNES-CSI= 2 and if reported |
| | Subband differential CQI associated with the second CRI for the first TB with increasing order of subband number, if numberOfNES-CSI= 2 and if reported |
| Note: Subbands for given CSI report n indicated by the higher layer parameter csi-ReportingBand are numbered continuously in the increasing order with the lowest subband of csi-ReportingBand as subband 0. | |

In an example of manner 2, the UE reports CSI for two different port configurations (muting pattern) with nes-CSI-ReportMode=2 and numberOfNES-CSI=2, and content of the first CSI is completely reported. One or more of the following content in a CSI Field of remaining CSI may be omitted: CRI, RI, CQI, Wideband CQI, Subband Differential CQI, LI, and PMI.

For example, Table 6 is a schematic table of a CSI report according to an embodiment of this application. As shown in Table 6, that the RI is omitted is used as an example. The RI needs to be reported only in the first piece of CSI, and the RI in the second piece of CSI is omitted. CSI fields included in the CSI report may include:

**Table 6**

| CSI report number | CSI fields |
|---|---|
| CSI report #n | CRI, if associated with one CSI-RS resource set, numberOfNES-CSI= 1 and if reported; |
| | First CRI, if associated with one CSI-RS resource set, numberOfNES-CSI= 2 and if reported |
| | Rank Indicator associated with first CRI, if reported |
| | Wideband CQI associated with CRI for the first TB, if numberOfNES-CSI= 1 and if reported; |
| | Wideband CQI associated with the first CRI for the first TB, if numberOfNES-CSI= 2 and if reported |
| | Subband differential CQI associated with CRI for the first TB with increasing order of subband number, if numberOfNES-CSI= 1 if reported; |
| | Subband differential CQI associated with the first CRI for the first TB with increasing order of subband number, if numberOfNES-CSI= 2 and if reported |
| | Second CRI as in Tables 6.3.1.1.2-3B, if associated with one CSI-RS resource set, numberOfNES-CSI= 2 and if reported |
| | Wideband CQI associated with the second CRI for the first TB, if numberOfNES-CSI= 2 and if reported |
| | Subband differential CQI associated with the second CRI for the first TB with increasing order of subband number, if numberOfNES-CSI= 2 and if reported |
| Note: Subbands for given CSI report n indicated by the higher layer parameter csi-ReportingBand are numbered continuously in the increasing order with the lowest subband of csi-ReportingBand as subband 0. | |

Optionally, in this embodiment of this application, it may be learned from the foregoing content that, in a case that the network side device indicates, by using DCI, the UE to report first CSI for a plurality of power offsets, the following step may be used for implementation:

Step 11: The network side configures that CSI-ReportConfigX is associated with a plurality of CSI-ResourceConfig.

FIG. 5 is a schematic diagram of a configuration according to an embodiment of this application. As shown in FIG. 5, for example, the network side device configures that CSI-ReportConfigX is associated with two groups of CSI-ResourceConfig. Each group includes three configurations, that is, (CMR, IMR, nzp-CSI-RS-ResourceForInterference (used to measure interference of an MU)), and a group of ((Id=3 of CMR, Id=4 of IMR, Id=5 of nzp-CSI-RS-ResourceForInterference (used to measure interference of the MU)) on the left is one group, and a group of (Id=6 of CMR, Id=2 of IMR, Id=2 of nzp-CSI-RS-ResourceForInterference (used to measure interference of the MU)) on the right is one group. According to one group of configurations, the UE can report a single piece of first CSI.

In an actual design process, to enable the UE to measure CSI corresponding to a plurality of different measurement assumptions, a plurality of sets of resource config may be configured in this case to correspond to different measurement assumptions. A plurality of resource configurations are configured for three purposes (CMR, IMR, and MU-MIMO IMR) in this case. However, in fact, only a plurality of resource config of the CMR may be configured to correspond to a plurality of measurement assumptions, or only a plurality of resource config of the IMR may be configured to correspond to a plurality of measurement assumptions, or only a plurality of resource config of the MU-MIMO IMR may be configured to correspond to different measurement assumptions. In this case, the CMR, the IMR, and the IMR used to measure interference of the MU are described as resourcesForChannelMeasurement, csi-IM-ResourcesForInterference, and nzp-CSI-RS-ResourcesForInterference in the protocol.

It should be noted that, compared with an existing protocol, the CSI sending method provided in this embodiment of this application modifies CSI-ReportConfig, that is, allows one CSI-ReportConfig to associate with a plurality of CSI-ResourceConfig for channel measurement, a plurality of CSI-ResourceConfig for interference measurement, and a plurality of nzp-CSI-RS-ResourceForInterference. To activate/deactivate a corresponding group of to-be-measured resource sets is indicated by indicating to activate/deactivate a corresponding CSI-ResourceConfig.

Step 12: The network side device sends the foregoing configuration to the UE through RRC.

Table 7 is a schematic table of a configuration according to an embodiment of this application. As shown in Table 7, the configuration may include:

**Table 7**

| Energy saving index Index | CSI-ReportConfi gId | CSI-ResourceConfigId (for channel measurement) | CSI-ResourceConfigId (csi-IM-ResourcesForInter ference) | CSI-ResourceConfigId (nzp-CSI-RS-ResourcesForInter ference) | power offset |
|---|---|---|---|---|---|
| 01 (Normal state) | X | 0 | 1 | 2 | 1 |
| 10 (Energy saving state) | X | 3 | 4 | 5 | 3 |

Step 13: The network side device may send group common DCI to activate one or more groups of configurations, and the UE reports one or more pieces of CSI according to an indication from the network side.

Referring to FIG. 5, one group of CMR, IMR, and nzp-CSI-RS-ResourceForInterference (interference of the MU) on the left is a measurement configuration for poweroffset1, and the group on the right is a measurement configuration for poweroffset2.

Step 14: The network side device indicates the group common DCI.

The DCI is group common DCI scrambled by using a group common RNTI. If the UE reads an energy saving index Index from the DCI, two bits of the energy saving index Index respectively represent whether the two groups of configurations are activated, 1 represents activated, and 0 represents deactivated. If value='01' of the energy saving index Index, the UE needs to perform CSI measurement reporting for the first group of configurations. If value='10' of the energy saving index Index, the UE needs to perform CSI measurement reporting for the second group of configurations. If value='11' of the energy saving index Index, the UE needs to perform CSI measurement reporting for the two groups of configurations. In this example, the DCI indicates '11', and the UE needs to perform CSI measurement reporting for the two groups of configurations.

Step 15: The UE reports two pieces of first CSI.

In a first case, if a plurality of pieces of first CSI s have no field that can be shared, the UE reports the two pieces of first CSI in ascending order of value sizes of power offset. In this example, assuming that the value of poweroffset1 is less than that of poweroffset2, CSI of poweroffset1 is arranged before another piece of CSI, that is, Table 8 provides a schematic table of a CSI report. As shown in Table 8, the CSI field and its explanation may include:

**Table 8**

| CSI report number | CSI fields | Explanation |
|---|---|---|
| CSI Report X | CRI 1 | CSI for power offset1 |
| | RI 1 | |
| | WidebandCQI 1 | |
| | Subband differential CQI 1 | |
| | PMI 1 | |
| | CRI 2 | CSI for power offset2 |
| | RI 2 | |
| | WidebandCQI 2 | |
| | Subband differential CQI 2 | |
| | PMI 2 | |

In a second case, if a plurality of pieces of first CSI have a CSI field that can be shared, when the UE reports two pieces of CSI for different power offsets, and a difference between values of the two power offsets is less than 3 dB (3 dB is specified in a protocol or configured by the network side), content other than CQIs in the two pieces of first CSI can be shared, that is, Table 9 or Table 10 provides a schematic table of a CSI report. As shown in Table 9 or Table 10, the CSI field may include:

**Table 9**

| CSI report number | CSI fields |
|---|---|
| CSI Report X | CRI |
| | RI |
| | WidebandCQI 1 |
| | Subband differential CQI 1 |
| | WidebandCQI 2 |
| | Subband differential CQI 2 |
| | PMI |

**Table 10**

| CSI report number | CSI fields |
|---|---|
| CSI Report X | CRI |
| | RI |
| | WidebandCQI 1 |
| | WidebandCQI 2 |
| | Subband differential CQI 1 |
| | Subband differential CQI 2 |
| | PMI |

Optionally, in this embodiment of this application, it may be learned from the foregoing content that, in a case that the network side device indicates, by using DCI, the UE to report first CSI for a plurality of muting patterns, the following step may be used for implementation:

Step 21: The network side device configures that each CSI-ResourceConfig is associated with a plurality of NZP-CSI-RS-ResourceSet.

FIG. 6 is a schematic diagram of a configuration according to an embodiment of this application. As shown in FIG. 6, for example, the network side device configures that CSI-ResourceConfig for channel measurement is associated with two NZP-CSI-RS-ResourceSet, CSI-ResourceConfig of csi-IM-ResourceForInterference is associated with two NZP-CSI-RS-ResourceSet, and CSI-ResourceConfig of nzp-CSI-RS-ResourceForInterference is associated with two NZP-CSI-RS-ResourceSet.

As shown in FIG. 6, the three in the first row are one group, and the three in the second row are another group. Each group includes three configurations, that is, (CMR, IMR, nzp-CSI-RS-ResourceForInterference (interference of the MU)). According to one group of configurations, the UE can report a single piece of first CSI.

Step 22: The network side device sends the foregoing configuration to the UE through RRC.

Table 11 is a schematic table of a configuration according to an embodiment of this application. As shown in Table 11, the configuration may include:

**Table 11**

| Energy saving index Index | CSI-ReportConfig | NZP-CSI-RS-ResourceSet (ForChannel Measurmen) | NZP-CSI-RS-ResourceSet (csi-IM-resourceForInt erference) | NZP-CSI-RS-ResourceSet (nzp-CSI-RS-ResourcesForInt erference) | Muting pattern |
|---|---|---|---|---|---|
| 01 | X | 1 | 2 | 3 | 1 |
| 10 | X | 4 | 5 | 6 | 2 |

FIG. 7 is a schematic diagram of a muting pattern according to an embodiment of this application. As shown in FIG. 7, schematic diagrams of different muting patterns are included.

Step 23: The network side device may send group common DCI to activate one or more groups of configurations, and the UE reports one or more pieces of CSI according to an indication from the network side device.

Referring to FIG. 6, a group of three resource sets (energy saving index Index01) in the first row is a measurement configuration for muting pattern 1, and a group of three resource sets (energy saving index Index10) in the second row is a measurement configuration for muting pattern2.

Step 24: The network side device indicates the group common DCI.

The DCI is group common DCI scrambled by using a group common RNTI. If the UE reads an energy saving index Index value='00' from the DCI, the UE does not perform reporting. If the UE reads the energy saving index Index value='01' from the DCI, the UE needs to perform CSI measurement reporting for the configuration of the first group of muting patterns. If the UE reads the energy saving index Index value='10' from the DCI, the UE needs to perform CSI measurement reporting for the configuration of the second group of muting patterns. If the UE reads the energy saving index Index value='11' from the DCI, the UE needs to perform CSI measurement reporting for the configurations of the two groups of muting patterns. In this example, the DCI indicates '11', and the UE needs to perform CSI measurement reporting for the configurations of the two groups of different muting patterns.

Step 25: The UE reports two pieces of first CSI.

In a first case, if a plurality of pieces of CSI have no field for sharing, the UE reports the two pieces of CSI in ascending order of sizes of muting pattern Ids. In this example, it is configured through RRC that the first group of configurations is a resource set configuration of muting pattern1, and the second group of configurations is a resource set configuration of muting pattern2. That is, Table 12 provides a schematic table of a CSI report. As shown in Table 12, the CSI field and its explanation may include:

**Table 12**

| CSI report number | CSI fields | Explanation |
|---|---|---|
| CSI Report X | CRI 1 | CSI for muting pattern 1 |
| | RI 1 | |
| | WidebandCQI 1 | |
| | Subband differential CQI 1 | |
| | PMI 1 | |
| | CRI 2 | CSI for muting pattern 2 |
| | RI 2 | |
| | WidebandCQI 2 | |
| | Subband differential CQI 2 | |
| | PMI 2 | |

In a second case, if a plurality of pieces of CSI can be simplified, when the UE reports two pieces of CSI for different muting patterns, CQI reporting may be a differential CQI relative to a baseline. The following example uses a CQI of muting pattern1 as a baseline, and a CQI of muting pattern2 may report a relative offset value relative to the baseline, so as to reduce a number of reported bits. That is, Table 13 provides a schematic table of a CSI report. As shown in Table 13, the CSI field and its explanation may include:

**Table 13**

| CSI report number | CSI fields | Explanation |
|---|---|---|
| CSI Report X | CRI 1 | CSI for muting pattern 1 |
| | RI 1 | |
| | WidebandCQI 1 | |
| | Subband differential CQI 1 | |
| | PMI 1 | |
| | CRI 2 | CSI for muting pattern 2 |
| | RI 2 | |
| | WidebandCQI 2 = Offset value relative to WidebandCQI 1 | |
| | Subband differential CQI 2 = Offset value relative to Subband differential CQI 1 | |
| | PMI 2 | |

It should be noted that if Index of wideband CQI 1 is '5'=0101, and Index of wideband CQI 2 is '6'=0110, to reduce a number of reported bits, wideband CQI 2 may replace the original four bits with an offset value 1 relative to wideband CQI 1.

According to the CSI sending method provided in this embodiment of this application, in a case that a plurality of pieces of first CSI can be sent, not only a condition for triggering sending a plurality of pieces of first CSI is designed, but also a form, sending content, and a sending sequence of sending the plurality of pieces of first CSI by the UE are designed. Therefore, a condition for triggering sending of CSI in the prior art is simplified, and a CSI rule, such as a sending rule, is simplified. By sending the plurality of pieces of first CSI, as much CSI as possible for different measurement assumptions can be reported to the network side device, and while assisting the network side device in making a more effective decision, energy consumption overheads for sending the plurality of pieces of first CSI are reduced.

Optionally, in this embodiment of this application, it may be learned from the foregoing content that, in a case that the plurality of pieces of first CSI sent by the UE are a plurality of pieces of first CSI in a same beam direction, the PMI may be omitted for reporting.

Tables 14 and 15 each provide a schematic table of a CSI report. As shown in Table 14 and Table 15, it is assumed that an angle of a beam direction 2 includes an angle at which a beam direction 1 is located. After the PMI is omitted, an arrangement rule of a plurality of pieces of first CSI, that is, CSI fields of the first CSI and an explanation thereof, may include:

**Table 14**

| CSI report number | CSI fields | Explanation |
|---|---|---|
| CSI Report X | CRI 1 | CSI for beam direction 1 |
| | RI 1 | |
| | WidebandCQI 1 | |
| | Subband differential CQI 1 | |
| | PMI 1 | |
| | CRI 2 | CSI for beam direction 2 |
| | RI 2 | |
| | WidebandCQI 2 | |
| | Subband differential CQI 2 | |

**Table 15**

| CSI report number | CSI fields |
|---|---|
| CSI Report X | CRI 1 |
| | CRI 2 |
| | RI 1 |
| | RI 2 |
| | WidebandCQI 1 |
| | WidebandCQI 2 |
| | Subband differential CQI 1 |
| | Subband differential CQI 2 |
| | PMI |

Optionally, in this embodiment of this application, it may be learned from the foregoing content that when the UE sends a set of CSI-RS resources (32 ports), the UE is indicated to report a plurality of pieces of first CSI (which are respectively 8-port CSI, 16-port CSI, and 32-port CSI) reported by the UE for the CSI-RS Resource, CRIs of the three pieces of CSI may be shared, and a remaining CSI field is still arranged according to an original sequence. As shown in a schematic table of a CSI report provided in Table 16, the first CSI may be arranged in the following manner:

**Table 16**

| CSI report number | CSI fields |
|---|---|
| CSI report #n | CRI |
| | Rank Combination Indicator represents RIs of the three pieces of CSI |
| | three Layer Indicators, represents LIs of the three pieces of CSI, and are sequentially arranged according to a sequence of CSI |
| | Zero padding bits *Oₚ* , if needed |
| | PMI wideband information fields X1, from left to right as in Tables 6.3.1.1.2-1, PMI wideband information bit X1 associated with a measurement resource corresponding to the first CSI |
| | PMI wideband information fields X2, from left to right as in Tables 6.3.1.1.2-1, or codebook index for 2 antenna ports according to Clause 5.2.2.2.1 in [6, TS38.214], PMI wideband information bit X2 associated with the measurement resource corresponding to the first CSI |
| | PMI wideband information fields X1, from left to right as in Tables 6.3.1.1.2-1, PMI wideband information bit X1 associated with a measurement resource corresponding to the second CSI |
| | PMI wideband information fields X2, from left to right as in Tables 6.3.1.1.2-1, or codebook index for 2 antenna ports according to Clause 5.2.2.2.1 in [6, TS38.214], PMI wideband information bit X2 associated with the measurement resource corresponding to the second CSI |
| | PMI wideband information fields X1, from left to right as in Tables 6.3.1.1.2-1, PMI wideband information bit X1 associated with a measurement resource corresponding to the third CSI |
| | PMI wideband information fields X2, from left to right as in Tables 6.3.1.1.2-1, or codebook index for 2 antenna ports according to Clause 5.2.2.2.1 in [6, TS38.214], PMI wideband information bit X2 associated with the measurement resource corresponding to the third CSI Wideband CQI for the first TB as in Tables 6.3.1.1.2-3A, if reported |

It should be noted that, in Table 16, the sequence of CSI in "sequentially arranged according to the sequence of CSI" is the first arrangement sequence mentioned above.

The CSI sending method provided in this embodiment of this application may be performed by a CSI sending apparatus. In the embodiments of this application, that the CSI sending apparatus performs the CSI sending method is used as an example to describe the CSI sending apparatus provided in the embodiments of this application.

FIG. 8 shows a possible schematic structural diagram of a CSI sending apparatus according to an embodiment of this application. As shown in FIG. 8, the CSI sending apparatus 60 may include a sending module 61.

The sending module 61 is configured to send a plurality of pieces of first CSI to a network side device according to a first form, where the plurality of pieces of first CSI are CSI for different measurement assumptions; and the first form includes at least one of the following:
feeding back one CSI report, where the CSI report includes the plurality of pieces of first CSI; or
feeding back a plurality of CSI reports, where one CSI report includes at least one piece of first CSI.

An embodiment of this application provides a CSI sending apparatus. UE sends a plurality of pieces of first CSI to a network side device according to a first form, where the plurality of pieces of first CSI are CSI for different measurement assumptions; and the first form includes at least one of the following: feeding back one CSI report, where the CSI report includes the plurality of pieces of first CSI; or feeding back a plurality of CSI reports, where one CSI report includes at least one piece of first CSI. A purpose of reporting the plurality of pieces of first CSI by the UE is that the plurality of pieces of first CSI are latest CSI obtained for different measurement assumptions. After the network side device has the plurality of pieces of latest CSI based on different measurement assumptions, it is more convenient to schedule data information according to a requirement, and the plurality of pieces of first CSI help the network side device make a more effective antenna muting decision.

The CSI sending apparatus in this embodiment of this application may be an electronic device, for example, an electronic device with an operating system; or may be a component, for example, an integrated circuit or a chip, in an electronic device. The electronic device may be a terminal, or may be another device different from the terminal. For example, the terminal may include but is not limited to the type of the foregoing listed terminal 11. Another device may be a server, a network attached storage (Network Attached Storage, NAS), or the like. This is not specifically limited in this embodiment of this application.

The CSI sending provided in this embodiment of this application can implement processes implemented in the foregoing CSI sending method embodiment, and achieve a same technical effect. To avoid repetition, details are not described herein again.

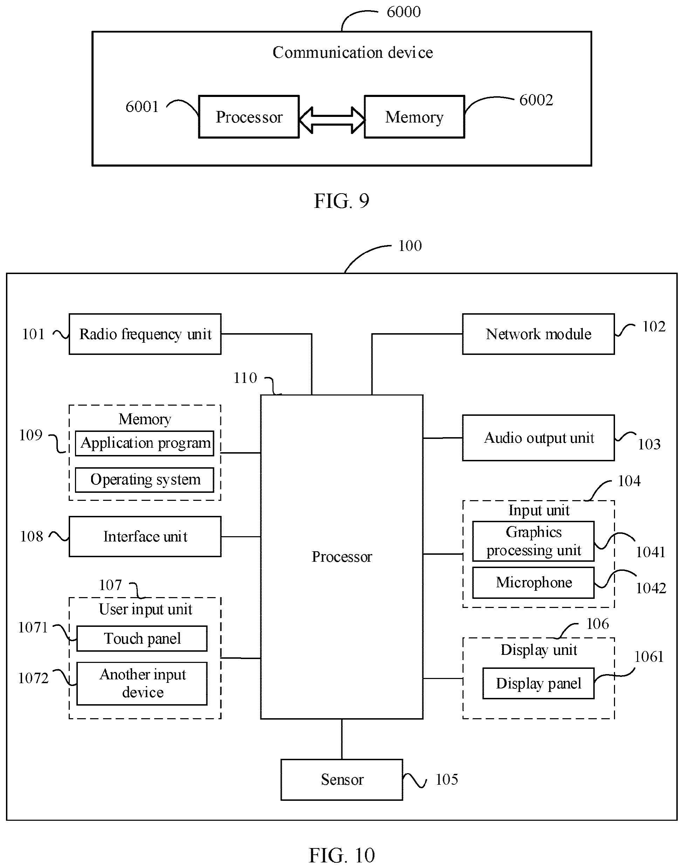

Optionally, as shown in FIG. 9, an embodiment of this application further provides a communications device 6000, including a processor 6001 and a memory 6002. A program or instructions that can be run on the processor 6001 are stored in the memory 6002. For example, if the communications device 6000 is a terminal, when the program or the instructions are executed by the processor 6001, each step of the CSI sending method embodiment is implemented, and a same technical effect can be achieved. When the communication device 6000 is a network side device, the program or the instructions are executed by the processor 6001 to implement the steps in the foregoing CSI sending method embodiment, and same technical effects can be achieved. To avoid repetition, details are not described herein again.

An embodiment of this application further provides a terminal (that is, UE), including a processor and a communication interface, where the processor is configured to send a plurality of pieces of first CSI according to a first form. This terminal embodiment is corresponding to the foregoing terminal-side method embodiment. Each implementation process and implementation of the foregoing method embodiment may be applied to this terminal embodiment, and a same technical effect can be achieved. Specifically, FIG. 10 is a schematic diagram of a hardware structure of a terminal according to an embodiment of this application.

The terminal 100 includes but is not limited to at least a part of components such as a radio frequency unit 101, a network module 102, an audio output unit 103, an input unit 104, a sensor 105, a display unit 106, a user input unit 107, an interface unit 108, a memory 109, and a processor 110.

The processor 110 is configured to send a plurality of pieces of first CSI to a network side device according to a first form, where the plurality of pieces of first CSI are CSI for different measurement assumptions; and the first form includes at least one of the following:
feeding back one CSI report, where the CSI report includes the plurality of pieces of first CSI; or
feeding back a plurality of CSI reports, where one CSI report includes at least one piece of first CSI.

An embodiment of this application provides a terminal. UE sends a plurality of pieces of first CSI to a network side device according to a first form, where the plurality of pieces of first CSI are CSI for different measurement assumptions; and the first form includes at least one of the following: feeding back one CSI report, where the CSI report includes the plurality of pieces of first CSI; or feeding back a plurality of CSI reports, where one CSI report includes at least one piece of first CSI. A purpose of reporting the plurality of pieces of first CSI by the UE is that the plurality of pieces of first CSI are latest CSI obtained for different measurement assumptions. After the network side device has the plurality of pieces of latest CSI based on different measurement assumptions, it is more convenient to schedule data information according to a requirement, and the plurality of pieces of first CSI help the network side device make a more effective antenna muting decision.

A person skilled in the art may understand that the terminal 100 may further include a power supply (for example, a battery) that supplies power to each component. The power supply may be logically connected to the processor 110 by using a power management system, so as to manage functions such as charging, discharging, and power consumption by using the power management system. The terminal structure shown in FIG. 10 constitutes no limitation on the terminal, and the terminal may include more or fewer components than those shown in the figure, or combine some components, or have different component arrangements.

It should be understood that, in this embodiment of this application, the input unit 104 may include a graphics processing unit (Graphics Processing Unit, GPU) 1041 and a microphone 1042. The graphics processing unit 1041 processes image data of a still picture or a video obtained by an image capture apparatus (such as a camera) in a video capture mode or an image capture mode. The display unit 106 may include a display panel 1061, and the display panel 1061 may be configured in a form of a liquid crystal display, an organic light-emitting diode, or the like. The user input unit 107 may include at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a function key (such as a volume control key or an on/off key), a trackball, a mouse, and a joystick. Details are not described herein.

In this embodiment of this application, after receiving downlink data from a network side device, the radio frequency unit 101 may transmit the downlink data to the processor 110 for processing. In addition, the radio frequency unit 101 may send uplink data to a network side device. Generally, the radio frequency unit 101 includes but is not limited to an antenna, an amplifier, a transceiver, a coupler, a low-noise amplifier, a duplexer, and the like.

The memory 109 may be configured to store a software program or instructions and various types of data. The memory 109 may mainly include a first storage area for storing a program or instructions and a second storage area for storing data, where the first storage area may store an operating system, an application program or instructions (such as a sound playback function or an image playback function) required by at least one function, and the like. In addition, the memory 109 may include a volatile memory or a non-volatile memory, or the memory 109 may include both a volatile memory and a non-volatile memory. The nonvolatile memory can be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory can be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 in this embodiment of this application includes but is not limited to these memories and any other suitable type of memory.

The processor 110 may include one or more processing units. Optionally, the processor 110 integrates an application processor and a modem processor, where the application processor mainly processes operations related to an operating system, a user interface, an application program, and the like, and the modem processor mainly processes a wireless communication signal, such as a baseband processor. It may be understood that, the foregoing modem processor may not be integrated into the processor 110.

An embodiment of this application further provides a readable storage medium. The readable storage medium stores a program or instructions. When the program or instructions are executed by a processor, each process of the foregoing CSI sending method embodiment is implemented, with the same technical effect achieved. To avoid repetition, details are not described herein again. The processor is the processor in the terminal in the foregoing embodiment. The readable storage medium includes a computer-readable storage medium such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing CSI sending method embodiment, with the same technical effect achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium. The computer program/program product is executed by at least one processor to implement each process of the foregoing CSI sending method embodiment, and the same technical effects can be achieved. To avoid repetition, details are not described herein again.

An embodiment of this application further provides a CSI sending system, including a terminal and a network side device, where the terminal may be configured to perform the steps of the foregoing CSI sending method.

It should be noted that, the terms "include", "comprise", or any other variation thereof in this specification are intended to cover a non-exclusive inclusion, so that a process, method, article, or apparatus that includes a list of elements includes the elements, and also includes other elements that are not expressly listed, or further includes elements inherent to such a process, method, article, or apparatus. Without more limitations, elements defined by the sentence "including one" does not exclude that there are still other same elements in the processes, methods, objects, or apparatuses that include the elements. In addition, it should be noted that, the scope of the method and apparatus in the implementations of this application is not limited to performing functions in a sequence shown or discussed, and may further include performing functions in a basically simultaneous manner or in a reverse order based on the functions involved. For example, the described method may be performed in an order different from the order described, and various steps may be added, omitted, or combined. In addition, features described with reference to some examples may be combined in other examples.

Based on the descriptions in the foregoing implementations, a person skilled in the art may clearly learn that the method in the foregoing embodiment may be implemented by software in addition to a necessary universal hardware platform or by hardware. In most circumstances, the former is a better implementation. Based on such an understanding, the technical solutions of this application essentially, or the part contributing to the prior art, may be presented in the form of a computer software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific implementations. The foregoing specific implementations are merely examples, and are not restrictive. Under the enlightenment of this application, many forms may be further made by a person of ordinary skill in the art without departing from the objective of this application and the protection scope of the claims and shall fall within the protection scope of this application.

## Claims

1. A channel state information CSI feedback method, wherein the method comprises:
sending, by a user equipment UE, a plurality of pieces of first CSI to a network side device according to a first form, wherein the plurality of pieces of first CSI are CSI for different measurement assumptions; and
the first form comprises at least one of the following:
feeding back one CSI report, wherein the CSI report comprises the plurality of pieces of first CSI; or
feeding back a plurality of CSI reports, wherein one CSI report comprises at least one piece of first CSI.

2. The method according to claim 1, wherein the sending, by a UE, a plurality of pieces of first CSI to a network side device according to a first form comprises:
feeding back, by the UE, the plurality of pieces of first CSI to the network side device according to the first form in a case that a first trigger condition is met; wherein
the first trigger condition comprises at least one of the following: the network side device indicates the UE to feed back the plurality of pieces of first CSI; the network side device configures the UE to feed back the plurality of pieces of first CSI; and the network side device activates M measurement assumptions corresponding to the first CSI, wherein M is an integer greater than 0.

3. The method according to claim 2, wherein the measurement assumption corresponding to the first CSI comprises at least one of the following:
a reference signal resource;
a reference signal resource set;
a power offset value;
a number of ports configuration corresponding to the reference signal resource;
a number of ports configuration corresponding to the reference signal resource set;
a port shutdown pattern corresponding to the reference signal resource;
a port shutdown pattern corresponding to the reference signal resource set;
a port muting muting pattern corresponding to the reference signal resource; and
a port muting muting pattern corresponding to the reference signal resource set.

4. The method according to claim 1, wherein each of the plurality of pieces of first CSI comprises at least one of the following: a CSI identifier and simplified CSI information;
the CSI identifier comprises at least one of the following:
an identifier of the first CSI;
a reference signal resource indicator;
a non-zero power channel state information reference signal resource set identifier;
a channel state information resource configuration identifier;
a group identifier of a non-zero power channel state information reference signal resource group;
a CSI report configuration identifier;
a port muting muting pattern identifier;
an identifier corresponding to a number of ports configuration; and
an identifier corresponding to a power offset value; and
the identifier of the first CSI is used to distinguish between the plurality of pieces of first CSI.

5. The method according to claim 4, wherein
the identifier of the first CSI is in a mapping association relationship with one or more of the following first information; and
the first information comprises at least one of the following:
non-zero power channel state information reference signal resource set information that needs to be measured by the first CSI;
non-zero power channel state information reference signal resource information or non-zero power channel state information reference signal resource group information that needs to be measured by the first CSI;
channel state information resource configuration information associated with the first CSI;
port muting muting pattern identifier information during measurement by the first CSI;
port shutdown shutdown pattern identifier information during measurement by the first CSI;
number of ports configuration information during measurement by the first CSI; and
power offset value information;
wherein
the mapping association relationship is configurable by the network side device; or
specified in an implicit rule.

6. The method according to claim 5, wherein
the implicit rule comprises at least one of the following:
it is specified that in the plurality of pieces of first CSI, identifiers of the first CSI are one-to-one mapped to CSI-RS resource set identifiers correspondingly measured by the first CSI;
it is specified that in the plurality of pieces of first CSI, the identifiers of the first CSI are one-to-one mapped to associated CSI resource configuration identifiers;
the network side device configures N power offset values, and it is specified that the identifiers of the first CSI are one-to-one mapped to the power offset values, wherein N is an integer greater than 0; and
the network side device configures N port shutdown patterns, and it is specified that the identifiers of the first CSI are one-to-one mapped to identifier values of the shutdown patterns, wherein N is an integer greater than 0.

7. The method according to claim 6, wherein
the CSI-RS resource set identifier may comprise at least one of the following:
a non-zero power channel state information reference signal resource set identifier associated with a channel state information resource configuration used for channel measurement;
a non-zero power channel state information reference signal resource set identifier associated with a channel state information resource configuration used for interference measurement; and
a non-zero power channel state information reference signal resource set identifier associated with a channel state information resource configuration used for interference measurement in a MU-MIMO scenario;
the CSI resource configuration identifier may comprise at least one of the following:
a channel state information resource configuration identifier used for channel measurement;
a channel state information resource configuration identifier used for interference measurement; and
a channel state information resource configuration identifier used for interference measurement in a multi-user multiple-input multiple-output MU-MIMO scenario;
the N power offset values are used to indicate the UE to report CSI for the N power offset values; and
the N port shutdown patterns are used to indicate the UE to report CSI for the N port shutdown patterns.

8. The method according to claim 4, wherein
the non-zero power channel state information reference signal resource set identifier is reported by using a direct indication and/or a bitmap bitmap indication;
the channel state information resource configuration identifier is reported by using a direct indication and/or a bitmap bitmap indication; and
the group identifier of the non-zero power channel state information reference signal resource group is reported by using a direct indication and/or a bitmap bitmap indication.

9. The method according to claim 4, wherein the first CSI comprises a CSI part 1 and a CSI part 2; and the identifier of the first CSI is carried in the CSI part 1; or a bit of the identifier of the first CSI is independently coded; and
a bit number of the identifier of the first CSI is determined according to a first number;
wherein the first number comprises at least one of the following:
a number of non-zero power channel state information reference signal resource sets associated with a CSI report to which the first CSI belongs;
a number of channel state information resource configurations associated with the CSI report to which the first CSI belongs;
a number of non-zero power reference signal resources associated with the CSI report to which the first CSI belongs; and
a number of non-zero power channel state information reference signal resource groups associated with the CSI report to which the first CSI belongs.

10. The method according to any one of claims 3 to 9, wherein the power offset value is a power offset value between a physical downlink shared channel PDSCH and a channel state information reference signal CSI-RS.

11. The method according to claim 1 or 4, wherein the method further comprises:
simplifying, by the UE, the plurality of pieces of first CSI according to second information and a first decision criterion;
the second information comprises at least one of the following:
payload information of resources carried in the plurality of pieces of first CSI;
number information of the plurality of pieces of first CSI;
measurement assumption information of the plurality of pieces of first CSI;
power offset value information corresponding to the plurality of pieces of first CSI;
measurement resource information of the plurality of pieces of first CSI;
rank information of the plurality of pieces of first CSI;
port muting muting pattern or port shutdown pattern information corresponding to the plurality of pieces of first CSI; and
beam direction information corresponding to measurement resources corresponding to the plurality of pieces of first CSI;
the first decision criterion comprises at least one of the following:
payloads of the resources carried in the plurality of pieces of first CSI are less than a threshold;
a number of the plurality of pieces of first CSI is greater than a threshold;
measurement assumptions corresponding to the plurality of pieces of first CSI are greater than a threshold;
a difference between power offset values corresponding to the plurality of pieces of first CSI is less than a threshold;
the measurement resources corresponding to the plurality of pieces of first CSI have a same measurement assumption;
ranks corresponding to the plurality of pieces of first CSI are the same;
port muting muting patterns corresponding to the plurality of pieces of first CSI have an inclusion/subordinate subset relationship;
the measurement resources corresponding to the plurality of pieces of first CSI are the same;
beam directions corresponding to the measurement resources corresponding to the plurality of pieces of first CSI are the same; and
an angle difference between the beam directions corresponding to the measurement resources corresponding to the plurality of pieces of first CSI is less than a threshold; and
the first decision criterion is configured by the network side device or specified in advance in a protocol, and the threshold is configured by the network side device or specified in advance in a protocol.

12. The method according to claim 1, wherein the method further comprises:
determining, by the UE, a first physical uplink control channel PUCCH resource according to third information, wherein the first PUCCH resource is used to send the plurality of pieces of first CSI;
the third information comprises at least one of the following:
number information of the plurality of pieces of first CSI;
total bit information of the plurality of pieces of first CSI;
CSI identifier information of the plurality of pieces of first CSI; and
number information of activated non-zero power channel state information reference signal resource sets associated with the plurality of pieces of first CSI, number information of CSI resource configurations, and number information of non-zero power channel state information reference signal resources;
a mapping association relationship exists between the third information and the first PUCCH resource; and
the mapping association relationship is configured by using higher layer signaling or indicated by layer-1 or layer-2 signaling or specified in advance in a protocol.

13. The method according to claim 1, wherein the method further comprises:
determining, by the UE according to fourth information, number information of channel state information processing units CPUs occupied by the plurality of pieces of first CSI; wherein
the fourth information comprises at least one of the following:
number information of activated CSI reference signal resource sets in each CSI feedback report;
number information of CSI reference signal resources activated in the activated CSI reference signal resource set in each CSI feedback report;
number information of power offsets activated in a CSI reference signal resource activated in the activated CSI reference signal resource set in each CSI feedback report; and
port configuration information activated in the CSI reference signal resource activated in the activated CSI reference signal resource set in each CSI feedback report; and
the port configuration information comprises a number of ports, a port muting pattern, and a port shutdown pattern.

14. The method according to claim 1, wherein before the sending, by a UE, a plurality of pieces of first CSI to a network side device according to a first form, the method further comprises:
arranging, by the UE, the plurality of pieces of first CSI according to a first arrangement sequence; wherein
the first arrangement sequence comprises at least one of the following:
arranging according to a sequence of identifiers of the plurality of pieces of first CSI;
arranging according to a sequence of bandwidth part identifiers BWP Ids corresponding to CSI resource configuration information associated with the plurality of pieces of first CSI;
arranging according to a sequence of non-zero power channel state information reference signal resource set identifiers associated with the plurality of pieces of first CSI;
arranging according to a sequence of CSI resource configuration identifiers associated with the plurality of pieces of first CSI;
arranging according to a sequence of port muting pattern identifiers associated with the plurality of pieces of first CSI;
arranging according to a sequence of port shutdown pattern identifiers associated with the plurality of pieces of first CSI;
arranging according to a sequence of numbers of ports corresponding to reference signal resources or resource sets associated with the plurality of pieces of first CSI; and
arranging according to a sequence of power offset values corresponding to the reference signal resources or the resource sets associated with the plurality of pieces of first CSI.

15. The method according to claim 1 or 14, wherein no shared CSI field exists in the plurality of pieces of first CSI; and
before the sending, by UE, a plurality of pieces of first CSI to a network side device according to a first form, the method further comprises:
sequentially arranging, by the UE, each piece of first CSI in the plurality of pieces of first CSI according to the first arrangement sequence, wherein an arrangement sequence of each field in each piece of first CSI is sorted according to a protocol stipulation;
or
arranging fields in the plurality of pieces of first CSI based on importance of the fields in the first CSI, wherein a type of CSI fields in each piece of first CSI is arranged according to the first arrangement sequence.

16. The method according to claim 1 or 14, wherein a shared CSI field exists in the plurality of pieces of first CSI; and
before the sending, by UE, a plurality of pieces of first CSI to a network side device according to a first form, the method further comprises:
arranging, by the UE, all CSI fields in the plurality of pieces of first CSI according to a second arrangement sequence;
wherein when all the CSI fields in the plurality of pieces of first CSI are sorted, only one piece of first CSI in the plurality of pieces of first CSI comprises the share field.

17. The method according to claim 16, wherein the second arrangement sequence comprises at least one of the following:
the share field is arranged before all the CSI fields in the plurality of pieces of first CSI;
the share field is arranged after all the CSI fields in the plurality of pieces of first CSI; and
the share field is arranged according to a sequence of a CSI field in one piece of first CSI.

18. The method according to claim 1, wherein the method further comprises:
first arranging, by the UE in a case that each of the plurality of pieces of first CSI comprises a CSI part 1 and a CSI part 2, the CSI part 1 and then arranging the CSI part 2 according to a target priority determining rule; and
discarding, by the UE in a case that a resource allocated by the network side device cannot be used to completely send the plurality of pieces of first CSI, the CSI part 2 in second CSI according to the target priority rule;
the second CSI is a part of first CSI in the plurality of pieces of first CSI;
the target priority determining rule is related to at least one of the following content:
information about an NZP CSI-RS resource set associated with each piece of first CSI;
CSI resource configuration information associated with each piece of first CSI;
information about an NZP CSI RS resource or an NZP CSI RS resource group associated with each piece of first CSI;
port configuration information corresponding to a reference signal resource associated with each piece of first CSI;
port configuration information corresponding to a reference signal resource set associated with each piece of first CSI;
port muting pattern/shutdown pattern information corresponding to the reference signal resource associated with each piece of first CSI;
port muting pattern/shutdown pattern information corresponding to the reference signal resource set associated with each piece of first CSI;
power offset information corresponding to the reference signal resource associated with each piece of first CSI; and
power offset information corresponding to the reference signal resource set associated with each piece of first CSI; and
the target priority determining rule may be indicated by a network side, or may be specified in advance in a protocol.

19. A channel state information CSI sending apparatus, wherein the apparatus comprises a sending module, wherein
the sending module is configured to send a plurality of pieces of first CSI to a network side device according to a first form, wherein the plurality of pieces of first CSI are CSI for different measurement assumptions; and
the first form comprises at least one of the following:
feeding back one CSI report, wherein the CSI report comprises the plurality of pieces of first CSI; or
feeding back a plurality of CSI reports, wherein one CSI report comprises at least one piece of first CSI.

20. The apparatus according to claim 19, wherein the sending module is specifically configured to: feed back, by a user equipment UE, the plurality of pieces of first CSI to the network side device according to the first form in a case that a first trigger condition is met; and
the first trigger condition comprises at least one of the following: the network side device indicates the UE to feed back the plurality of pieces of first CSI; the network side device configures the UE to feed back the plurality of pieces of first CSI; and the network side device activates M measurement assumptions corresponding to the first CSI, wherein M is an integer greater than 0.

21. The apparatus according to claim 20, wherein the measurement assumption corresponding to the first CSI comprises at least one of the following:
a reference signal resource;
a reference signal resource set;
a power offset value;
a number of ports configuration corresponding to the reference signal resource;
a number of ports configuration corresponding to the reference signal resource set;
a port shutdown pattern corresponding to the reference signal resource;
a port shutdown pattern corresponding to the reference signal resource set;
a port muting muting pattern corresponding to the reference signal resource; and
a port muting muting pattern corresponding to the reference signal resource set.

22. The apparatus according to claim 19, wherein each of the plurality of pieces of first CSI comprises at least one of the following: a CSI identifier and simplified CSI information;
the CSI identifier comprises at least one of the following:
an identifier of the first CSI;
a reference signal resource indicator;
a non-zero power channel state information reference signal resource set identifier;
a channel state information resource configuration identifier;
a group identifier of a non-zero power channel state information reference signal resource group;
a CSI report configuration identifier;
a port muting muting pattern identifier;
an identifier corresponding to a number of ports configuration; and
an identifier corresponding to a power offset value; and
the identifier of the first CSI is used to distinguish between the plurality of pieces of first CSI.

23. The apparatus according to claim 22, wherein
the identifier of the first CSI is in a mapping association relationship with one or more of the following first information; and
the first information comprises at least one of the following:
non-zero power channel state information reference signal resource set information that needs to be measured by the first CSI;
non-zero power channel state information reference signal resource information or non-zero power channel state information reference signal resource group information that needs to be measured by the first CSI;
channel state information resource configuration information associated with the first CSI;
port muting muting pattern identifier information during measurement by the first CSI;
port shutdown shutdown pattern identifier information during measurement by the first CSI;
number of ports configuration information during measurement by the first CSI; and
power offset value information;
wherein
the mapping association relationship is configurable by the network side device; or
specified in an implicit rule.

24. The apparatus according to claim 23, wherein
the implicit rule comprises at least one of the following:
it is specified that in the plurality of pieces of first CSI, identifiers of the first CSI are one-to-one mapped to CSI-RS resource set identifiers correspondingly measured by the first CSI;
it is specified that in the plurality of pieces of first CSI, the identifiers of the first CSI are one-to-one mapped to associated CSI resource configuration identifiers;
the network side device configures N power offset values, and it is specified that the identifiers of the first CSI are one-to-one mapped to the power offset values, wherein N is an integer greater than 0; and
the network side device configures N port shutdown patterns, and it is specified that the identifiers of the first CSI are one-to-one mapped to identifier values of the shutdown patterns, wherein N is an integer greater than 0.

25. The apparatus according to claim 24, wherein
the CSI-RS resource set identifier may comprise at least one of the following:
a non-zero power channel state information reference signal resource set identifier associated with a channel state information resource configuration used for channel measurement;
a non-zero power channel state information reference signal resource set identifier associated with a channel state information resource configuration used for interference measurement; and
a non-zero power channel state information reference signal resource set identifier associated with a channel state information resource configuration used for interference measurement in a MU-MIMO scenario;
the CSI resource configuration identifier may comprise at least one of the following:
a channel state information resource configuration identifier used for channel measurement;
a channel state information resource configuration identifier used for interference measurement; and
a channel state information resource configuration identifier used for interference measurement in a MU-MIMO scenario;
the N power offset values are used to indicate the UE to report CSI for the N power offset values; and
the N port shutdown patterns are used to indicate the UE to report CSI for the N port shutdown patterns.

26. The apparatus according to claim 22, wherein
the non-zero power channel state information reference signal resource set identifier is reported by using a direct indication and/or a bitmap bitmap indication;
the channel state information resource configuration identifier is reported by using a direct indication and/or a bitmap bitmap indication; and
the group identifier of the non-zero power channel state information reference signal resource group is reported by using a direct indication and/or a bitmap bitmap indication.

27. The apparatus according to claim 22, wherein the first CSI comprises a CSI part 1 and a CSI part 2; and the identifier of the first CSI is carried in the CSI part 1; or a bit of the identifier of the first CSI is independently coded; and
a bit number of the identifier of the first CSI is determined according to a first number;
a number of non-zero power channel state information reference signal resource sets associated with a CSI report to which the first CSI belongs;
a number of channel state information resource configurations associated with the CSI report to which the first CSI belongs;
a number of non-zero power reference signal resources associated with the CSI report to which the first CSI belongs; and
a number of non-zero power channel state information reference signal resource groups associated with the CSI report to which the first CSI belongs.

28. The apparatus according to any one of claims 21 to 27, wherein the power offset value is a power offset value between a physical downlink shared channel PDSCH and a channel state information reference signal CSI-RS.

29. The apparatus according to claim 19 or 22, wherein the apparatus further comprises: a simplifying module;
the simplifying module is configured to simplify the plurality of pieces of first CSI according to second information and a first decision criterion;
the second information comprises at least one of the following:
payload information of resources carried in the plurality of pieces of first CSI;
number information of the plurality of pieces of first CSI;
measurement assumption information of the plurality of pieces of first CSI;
power offset value information corresponding to the plurality of pieces of first CSI;
measurement resource information of the plurality of pieces of first CSI;
rank information of the plurality of pieces of first CSI;
port muting muting pattern or port shutdown pattern information corresponding to the plurality of pieces of first CSI; and
beam direction information corresponding to measurement resources corresponding to the plurality of pieces of first CSI;
the first decision criterion comprises at least one of the following:
payloads of the resources carried in the plurality of pieces of first CSI are less than a threshold;
a number of the plurality of pieces of first CSI is greater than a threshold;
measurement assumptions corresponding to the plurality of pieces of first CSI are greater than a threshold;
a difference between power offset values corresponding to the plurality of pieces of first CSI is less than a threshold;
the measurement resources corresponding to the plurality of pieces of first CSI have a same measurement assumption;
ranks corresponding to the plurality of pieces of first CSI are the same;
port muting muting patterns corresponding to the plurality of pieces of first CSI have an inclusion/subordinate subset relationship;
the measurement resources corresponding to the plurality of pieces of first CSI are the same;
beam directions corresponding to the measurement resources corresponding to the plurality of pieces of first CSI are the same; and
an angle difference between the beam directions corresponding to the measurement resources corresponding to the plurality of pieces of first CSI is less than a threshold; and
the first decision criterion is configured by the network side device or specified in advance in a protocol, and the threshold is configured by the network side device or specified in advance in a protocol.

30. The apparatus according to claim 19, wherein the apparatus further comprises a determining module, and
the determining module is configured to determine a first physical uplink control channel PUCCH resource according to third information, wherein the first PUCCH resource is used to send the plurality of pieces of first CSI;
the third information comprises at least one of the following:
number information of the plurality of pieces of first CSI;
total bit information of the plurality of pieces of first CSI;
CSI identifier information of the plurality of pieces of first CSI; and
number information of activated non-zero power channel state information reference signal resource sets associated with the plurality of pieces of first CSI, number information of CSI resource configurations, and number information of non-zero power channel state information reference signal resources;
a mapping association relationship exists between the third information and the first PUCCH resource; and
the mapping association relationship is configured by using higher layer signaling or indicated by layer-1 or layer-2 signaling or specified in advance in a protocol.

31. The apparatus according to claim 19, wherein the apparatus further comprises a determining module, and
the determining module is configured to determine, according to fourth information, number information of channel state information processing units CPUs occupied by the plurality of pieces of first CSI;
the fourth information comprises at least one of the following:
number information of activated CSI reference signal resource sets in each CSI feedback report;
number information of CSI reference signal resources activated in the activated CSI reference signal resource set in each CSI feedback report;
number information of power offsets activated in a CSI reference signal resource activated in the activated CSI reference signal resource set in each CSI feedback report.

32. The apparatus according to claim 19, wherein the apparatus further comprises an arrangement module; and
the arrangement module is configured to: before the sending module sends the plurality of pieces of first CSI to the network side device according to the first form, arrange the plurality of pieces of first CSI according to a first arrangement sequence; and
the first arrangement sequence comprises at least one of the following:
arranging according to a sequence of identifiers of the plurality of pieces of first CSI;
arranging according to a sequence of bandwidth part identifiers BWP Ids corresponding to CSI resource configuration information associated with the plurality of pieces of first CSI;
arranging according to a sequence of non-zero power channel state information reference signal resource set identifiers associated with the plurality of pieces of first CSI;
arranging according to a sequence of CSI resource configuration identifiers associated with the plurality of pieces of first CSI;
arranging according to a sequence of port muting pattern identifiers associated with the plurality of pieces of first CSI;
arranging according to a sequence of port shutdown pattern identifiers associated with the plurality of pieces of first CSI;
arranging according to a sequence of numbers of ports corresponding to reference signal resources or resource sets associated with the plurality of pieces of first CSI; and
arranging according to a sequence of power offset values corresponding to the reference signal resources or the resource sets associated with the plurality of pieces of first CSI.

33. The apparatus according to claim 19 or 32, wherein no shared CSI field exists in the plurality of pieces of first CSI; and the apparatus further comprises an arrangement module, wherein
the arrangement module is configured to: before the sending module sends the plurality of pieces of first CSI to the network side device according to the first form, sequentially arrange each piece of first CSI in the plurality of pieces of first CSI according to the first arrangement sequence, wherein an arrangement sequence of each field in each piece of first CSI is sorted according to a protocol stipulation;
or
arrange fields in the plurality of pieces of first CSI based on importance of the fields in the first CSI, wherein a type of CSI fields in each piece of first CSI is arranged according to the first arrangement sequence.

34. The apparatus according to claim 19 or 32, wherein a shared CSI field exists in the plurality of pieces of first CSI; and the apparatus further comprises an arrangement module, wherein
the arrangement module is configured to: before the sending module sends the plurality of pieces of first CSI to the network side device according to the first form, arrange all CSI fields in the plurality of pieces of first CSI according to a second arrangement sequence;
wherein when all the CSI fields in the plurality of pieces of first CSI are sorted, only one piece of first CSI in the plurality of pieces of first CSI comprises the share field.

35. The apparatus according to claim 34, wherein the second arrangement sequence comprises at least one of the following:
the share field is arranged before all the CSI fields in the plurality of pieces of first CSI;
the share field is arranged after all the CSI fields in the plurality of pieces of first CSI; and
the share field is arranged according to a sequence of a CSI field in one piece of first CSI.

36. The apparatus according to claim 19, wherein the apparatus further comprises a processing module, wherein
the processing module is configured to: first arrange, in a case that each of the plurality of pieces of first CSI comprises a CSI part 1 and a CSI part 2, the CSI part 1 and then arrange the CSI part 2 according to a target priority determining rule; and
discard, in a case that a resource allocated by the network side device cannot be used to completely send the plurality of pieces of first CSI, the CSI part 2 in second CSI according to the target priority rule;
the second CSI is a part of first CSI in the plurality of pieces of first CSI;
the target priority determining rule is related to at least one of the following content:
information about an NZP CSI-RS resource set associated with each piece of first CSI;
CSI resource configuration information associated with each piece of first CSI;
information about an NZP CSI RS resource or an NZP CSI RS resource group associated with each piece of first CSI;
port configuration information corresponding to a reference signal resource associated with each piece of first CSI;
port configuration information corresponding to a reference signal resource set associated with each piece of first CSI;
port muting pattern/shutdown pattern information corresponding to the reference signal resource associated with each piece of first CSI;
port muting pattern/shutdown pattern information corresponding to the reference signal resource set associated with each piece of first CSI;
power offset information corresponding to the reference signal resource associated with each piece of first CSI; and
power offset information corresponding to the reference signal resource set associated with each piece of first CSI; and
the target priority determining rule may be indicated by a network side, or may be specified in advance in a protocol.

37. UE, comprising a processor and a memory, wherein the memory stores a program or instructions capable of running on the processor, and the program or the instructions are executed by the processor to implement the steps of the CSI sending method according to any one of claims 1 to 18.

38. A readable storage medium, wherein the readable storage medium stores a program or instructions, and the program or the instructions are executed by a processor to implement the steps of the CSI sending method according to any one of claims 1 to 18.
